# EUROPEAN PATENT SPECIFICATION

(11) **EP 3 719 692 B1**
(45) Date of publication and mention of the grant of the patent: **26.03.2025**
(21) Application number: 17935684.5
(22) Date of filing: 21.12.2017
(51) Int. Cl.: G06N 3/08, H04M 1/00, G06V 10/82, G06V 20/58, G06N 3/045

(54) **INFORMATION DETECTION METHOD AND MOBILE DEVICE**
INFORMATIONSDETEKTIONSVERFAHREN UND MOBILE VORRICHTUNG
PROCÉDÉ DE DÉTECTION D'INFORMATIONS ET DISPOSITIF MOBILE

(43) Date of publication of application: 07.10.2020
(73) Proprietor: HUAWEI TECHNOLOGIES CO., LTD., Shenzhen, Guangdong 518129 (CN)
(72) Inventor: GU, Qiang, Shenzhen, Guangdong 518129 (CN); LIU, Liu, Shenzhen, Guangdong 518129 (CN); YAO, Jun, Shenzhen, Guangdong 518129 (CN)
(74) Representative: Gill Jennings & Every LLP
(86) International application number: PCT/CN2017/117775
(87) International publication number: WO 2019/119356

(56) References cited:
- CN-A- 102 298 852
- CN-A- 105 976 062
- CN-A- 106 570 494
- CN-A- 106 650 641
- US-A1- 2010 283 855
- US-A1- 2014 185 880
- US-A1- 2015 179 088
- US-A1- 2017 024 641
- VALERY OLIVIER ET AL: "CPU/GPU Collaboration Techniques for Transfer Learning on Mobile Devices", 2013 INTERNATIONAL CONFERENCE ON PARALLEL AND DISTRIBUTED SYSTEMS, IEEE, 15 December 2017 (2017-12-15), pages 477 - 484, XP033351498, ISSN: 1521-9097, [retrieved on 20180529], DOI: 10.1109/ICPADS.2017.00069
- BEHRENDT KARSTEN ET AL: "A deep learning approach to traffic lights: Detection, tracking, and classification", 2017 IEEE INTERNATIONAL CONFERENCE ON ROBOTICS AND AUTOMATION (ICRA), IEEE, 29 May 2017 (2017-05-29), pages 1370 - 1377, XP033126905, DOI: 10.1109/ICRA.2017.7989163
- JOHN VIJAY ET AL: "Saliency Map Generation by the Convolutional Neural Network for Real-Time Traffic Light Detection Using Template Matching", IEEE TRANSACTIONS ON COMPUTATIONAL IMAGING, IEEE, vol. 1, no. 3, 1 September 2015 (2015-09-01), pages 159 - 173, XP011588186, DOI: 10.1109/TCI.2015.2480006
- CIESLAK DAVID A. ET AL: "Hellinger distance decision trees are robust and skew-insensitive", JOURNAL OF DATA MINING AND KNOWLEDGE DISCOVERY, vol. 24, no. 1, 9 June 2011 (2011-06-09), US, pages 136 - 158, XP093050778, ISSN: 1384-5810, Retrieved from the Internet <URL:http://link.springer.com/article/10.1007/s10618-011-0222-1/fulltext.html> DOI: 10.1007/s10618-011-0222-1

## Description

### TECHNICAL FIELD

The present disclosure relates to the field of terminal technologies, and in particular, to an information detection method, a mobile device and a server.

### BACKGROUND

In the field of vehicle self-driving, detection accuracy of a signal light status is of great significance to legality, regulation compliance, and safe driving of a vehicle. In an existing self-driving system in the industry, a machine learning method (for example, a deep learning method) is usually used to detect a signal light status. A process of detecting a signal light status by using a machine learning method is generally as follows: First, a device needs to collect a large quantity of signal light pictures, for example, collect 100 signal light pictures of an intersection 1, collect 100 signal light pictures of an intersection 2, and collect 100 signal light pictures of an intersection 3. In addition, signal light statuses in the 300 signal light pictures need to be input into the device, that is, colors and shapes of turned-on signal lights are input. The device performs training and learning by using the 300 signal light pictures and a signal light status in each signal light picture, to obtain a detection model. When a mobile device photographs a new signal light picture, the new signal light picture is input into the detection model, so that a signal light status in the signal light picture can be detected, that is, a color and a shape of a turned-on signal light in the signal light picture can be detected.

However, in the prior art, a same detection model is used for signal light detection in all places, resulting in a comparatively low correctness percentage in detection of a signal light status by a mobile device.

JOHN VIJAY ET AL: "Saliency Map Generation by the Convolutional Neural Network for Real-Time Traffic Light Detection Using Template Matching", IEEE TRANSACTIONS ON COMPUTATIONAL IMAGING, IEEE, vol. 1, no. 3, 1 September 2015 (2015-09-01), pages 159-173, relates to saliency map generation by the convolutional neural network for real-time traffic light detection using template matching.

US 2015/179088 A1 (RAMAN TIRUVILWAMALAI VENKATRAMAN [US] ET AL) 25 June 2015.

US 2014/185880 A1 (FAIRFIELD NATHANIEL [US] ET AL) 3 July 2014.

### SUMMARY

Implementations of the present disclosure disclose an information detection method, a mobile device and a server, to help improve a correctness percentage in detection of a signal light status by the mobile device.

The invention has been defined in the independent claims. Further specific technical features have been defined in the dependent claims.

In the prior art, a mobile device detects a signal light status in a picture by using a general model. The general model is obtained through training based on signal light pictures of a plurality of intersections. Therefore, the general model is not well targeted, and it is not very accurate to detect a signal light status of an intersection by using the general model. In the method described in the first aspect, the signal light status of the first intersection is detected by using the detection model corresponding to the first intersection. The detection model corresponding to the first intersection is obtained through training based on the plurality of signal light pictures of the first intersection, and is not obtained through training with reference to a signal light picture of another intersection. Therefore, the detection model corresponding to the first intersection can better fit a signal light feature of the first intersection, thereby improving a correctness percentage in detection of the signal light status of the first intersection.

In addition, in the prior art, when the general model is obtained through training based on signal light pictures, signal light statuses in the pictures are manually recognized, and the recognized signal light statuses are input into the device. Obtaining the general model through training requires a large quantity of pictures. Therefore, signal light statuses in the large quantity of pictures need to be manually recognized and input. This consumes a lot of manpower and is very unintelligent. In implementation of the method described in the first aspect, when the detection model corresponding to the first intersection is obtained through training based on the signal light pictures corresponding to the first intersection, the signal light statuses in the signal light pictures corresponding to the first intersection are automatically recognized by using the general model (that is, an existing model). Signal light statuses in a large quantity of pictures do not need to be manually recognized and input. The signal light statuses in the signal light pictures of the first intersection can be obtained more intelligently and conveniently. Therefore, the detection model corresponding to the first intersection can be obtained through training more quickly.

In an implementation, the mobile device automatically identifies the signal light statuses in the signal light pictures of the first intersection by using the general model (that is, the existing model). Therefore, signal light statuses in a large quantity of pictures do not need to be manually recognized and input, and the signal light statuses in the signal light pictures of the first intersection can be more intelligently and conveniently obtained. In addition, the mobile device can send the signal light pictures of the first intersection and the signal light statuses in the signal light pictures of the first intersection to the server, so that the server generates, based on the signal light pictures of the first intersection and the signal light statuses in the signal light pictures of the first intersection, the detection model corresponding to the first intersection.

The mobile device receives the first detection model from the server, to detect the signal light status of the first intersection by using the first detection model.

In an implementation, the mobile device uploads, to the server, a signal light picture photographed in the first direction of the first intersection and a corresponding detection result, so that the server can obtain, through training based on the received signal light picture and the corresponding detection result, the detection model corresponding to the first intersection and the first direction. The detection model corresponding to the first intersection and the first direction can better fit a feature of the signal light picture photographed in the first direction of the first intersection, thereby improving a correctness percentage in detection of a signal light status in the signal light picture photographed in the first direction of the first intersection.

In an implementation, the mobile device obtains the first detection model from the server, to detect, by using the first detection model, the signal light status in the signal light picture photographed in the first direction of the first intersection.

In an implementation, the mobile device uploads, to the server, the signal light picture photographed on the first lane in the first direction of the first intersection and a corresponding detection result, so that the server can obtain, through training based on the received signal light picture and the corresponding detection result, the detection model corresponding to the first intersection, the first direction, and the first lane. The detection model corresponding to the first intersection, the first direction, and the first lane can better fit a feature of the signal light picture photographed on the first lane in the first direction of the first intersection, thereby improving a correctness percentage in detection of a signal light status in the signal light picture photographed on the first lane in the first direction of the first intersection.

In an implementation, the mobile device obtains the first detection model from the server, to detect, by using the first detection model, the signal light status in the signal light picture photographed on the first lane in the first direction of the first intersection.

In an implementation, the server generates, based on only signal light pictures of the first intersection and signal light statuses in the signal light pictures of the first intersection, the detection model corresponding to the first intersection, instead of obtaining, through training by using a signal light picture of another intersection, the detection model corresponding to the first intersection. In this way, the generated detection model corresponding to the first intersection can better fit a signal light feature of the first intersection, thereby improving a correctness percentage in detection of the signal light status of the first intersection.

In an implementation, the server broadcasts the first detection model to the mobile device when the mobile device is within a preset range of the first intersection.

In an implementation, the server obtains, through training based on the received signal light picture and the corresponding detection result, the detection model corresponding to the first intersection and the first direction. The detection model corresponding to the first intersection and the first direction can better fit a feature of a signal light picture photographed in the first direction of the first intersection, thereby improving a correctness percentage in detection of the signal light status in the signal light picture photographed in the first direction of the first intersection.

In an implementation, the server obtains, through training based on the received signal light picture and the corresponding detection result, the detection model corresponding to the first intersection, the first direction, and the first lane. The detection model corresponding to the first intersection, the first direction, and the first lane can better fit a feature of a signal light picture photographed on the first lane in the first direction of the first intersection, thereby improving a correctness percentage in detection of the signal light status in the signal light picture photographed on the first lane in the first direction of the first intersection.

### BRIEF DESCRIPTION OF DRAWINGS

FIG. 1 is a schematic diagram of a communications system according to an implementation of the present disclosure;
FIG. 2 is a schematic flowchart of an information detection method according to an implementation of the present disclosure;
FIG. 3 is a schematic diagram of a deep learning network according to an implementation of the present disclosure;
FIG. 4 is a schematic flowchart of an information detection method according to an implementation of the present disclosure;
FIG. 5 is a schematic diagram of obtaining a detection model through training according to an implementation of the present disclosure;
FIG. 6 is a schematic diagram of obtaining a detection model through training according to an implementation of the present disclosure;
FIG. 7 is a schematic diagram of obtaining a detection model through training according to an implementation of the present disclosure;
FIG. 8 is a schematic flowchart of an information detection method according to an implementation of the present disclosure;
FIG. 9 is a schematic flowchart of an information detection method according to an implementation of the present disclosure;
FIG. 10 is a schematic flowchart of an information detection method according to an implementation of the present disclosure;
FIG. 11 is a schematic structural diagram of a mobile device according to an implementation of the present disclosure;
FIG. 12 is a schematic structural diagram of a server according to an implementation of the present disclosure;
FIG. 13 is a schematic structural diagram of a mobile device according to an implementation of the present disclosure;
FIG. 14 is a schematic structural diagram of a server according to an implementation of the present disclosure.

### DESCRIPTION OF IMPLEMENTATIONS

To make the objectives, technical solutions, and advantages of this invention clearer, the following further describes various implementations in detail with reference to the accompanying drawings. The implementations described below are not all claimed, they are included to help understanding the context of the invention. While the description refers to various implementations, the embodiments of the invention are those which comprise at least all the features of an independent claim. Any implementation which does not fall within the scope of the claims does not form part of the invention, but rather included as an illustrative example that is useful for understanding the invention.

The implementations of this application provide an information detection method, a mobile device and a server, to help improve a correctness percentage in detection of a signal light status by the mobile device.

For better understanding of the implementations of this application, the following describes a communications system to which the implementations of this application are applicable.

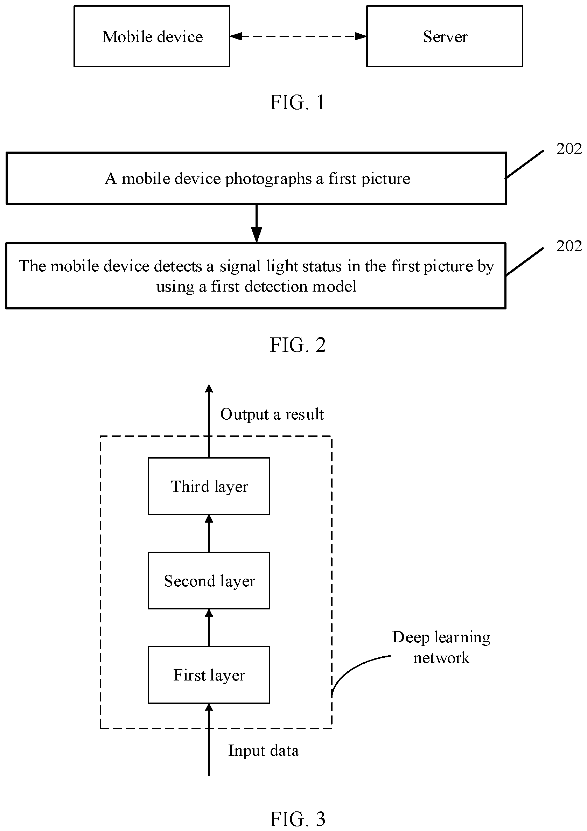

FIG. 1 is a schematic diagram of a communications system according to an implementation of this application. As shown in FIG. 1, the communications system includes a mobile device and a server. Wireless communication may be performed between the mobile device and the server.

The mobile device may be a device, such as an automobile (for example, a self-driving vehicle or a person-driving vehicle) or an in-vehicle device, that needs to identify a signal light status. The signal light is a traffic signal light.

The server is configured to generate a detection model corresponding to an intersection, and the detection model is used by the mobile device to detect a signal light status at the intersection.

The following describes details of the information detection method and the mobile device provided in this application.

FIG. 2 is a schematic flowchart of an information detection method according to an implementation of this application. As shown in FIG. 2, the information detection method includes the following 201 and 202.

201. A mobile device photographs a first picture.

The first picture includes a signal light at a first intersection. The first intersection may be any intersection. The signal light is a traffic signal light.

Optionally, the first picture may be a picture directly photographed by the mobile device, or the first picture may be a frame picture in video data photographed by the mobile device.

Optionally, the mobile device may photograph the first picture when the mobile device is within a preset range of the first intersection.

Specifically, the mobile device photographs the first picture by using a photographing apparatus of the mobile device. The photographing apparatus may be a camera or the like.

202. The mobile device detects a signal light status in the first picture by using a first detection model.

That the mobile device detects the signal light status in the first picture by using the first detection model may be: the mobile device detects a color and a shape of a turned-on signal light in the first picture by using the first detection model. The color of the turned-on signal light may be red, green, or yellow. The shape of the turned-on signal light may be a circle, an arrow pointing to the left, an arrow pointing to the right, an arrow pointing upwards, an arrow pointing downwards, or the like.

The first detection model is a detection model corresponding to the first intersection. The first detection model is obtained by the server through training based on signal light pictures corresponding to the first intersection and signal light statuses in the signal light pictures. The signal light statuses in the signal light pictures are obtained through detection by using a general model. The general model is obtained through training based on pictures in a first set and a signal light status in each picture in the first set. The first set includes signal light pictures of a plurality of intersections.

The signal light picture corresponding to the first intersection is a picture including a signal light at the first intersection. The first intersection may correspond to one or more signal light pictures. For example, the server may obtain the first detection model through training based on 100 signal light pictures corresponding to the first intersection and signal light statuses in the 100 signal light pictures. In other words, the server obtains the first detection model through training based on only the signal light pictures corresponding to the first intersection and the signal light statuses in the signal light pictures corresponding to the first intersection, instead of obtaining the first detection model through training based on a signal light picture of another intersection and a corresponding signal light status.

The first set includes signal light pictures of a plurality of intersections. For example, the first set includes 100 signal light pictures of the first intersection, 100 signal light pictures of a second intersection, and 100 signal light pictures of a third intersection. Therefore, the general model is obtained through training based on signal light pictures of a plurality of intersections and signal light statuses in the pictures.

Optionally, the server may obtain, through training by using a machine learning method (for example, a deep learning method) and based on the signal light pictures corresponding to the first intersection and the signal light statuses in the signal light pictures corresponding to the first intersection, the detection model corresponding to the first intersection. For example, as shown in FIG. 3, a deep learning network is set in the deep learning method. The deep learning network is divided into a plurality of layers, each layer performs nonlinear transformation such as convolution and pooling, and the layers are connected based on different weights. In FIG. 3, for example, there are three deep learning network layers. There may be less than three or more than three deep learning network layers. The server inputs the signal light pictures corresponding to the first intersection into the deep learning network for training. The server obtains input data of a next layer based on output data of a previous layer. The server compares a final output result of the deep learning network with the signal light status in the signal light picture, to adjust a weight of the deep learning network to form a model.

For example, 100 signal light pictures corresponding to the first intersection are respectively a picture 1 to a picture 100. The picture 1 to the picture 100 each include a signal light at the first intersection. The server inputs the picture 1 to the picture 100 into the deep learning network, and the server compares an output result of the deep learning network with signal light statuses in the picture 1 to the picture 100, to adjust a weight value of the deep learning network to finally obtain the first detection model. Therefore, after the first picture is input into the first detection model, the signal light status in the first picture may be recognized by using the first detection model.

The signal light statuses of the picture 1 to the picture 100 are detected by using the general model. The general model is obtained through training based on signal light pictures of a plurality of intersections and signal light statuses in the pictures. In other words, the general model is a model used to detect a signal light at any intersection, or a general detection algorithm used for a signal light at any intersection. A parameter in the general model is not adjusted for a specific intersection, and may be obtained by using a model or an algorithm in the prior art.

In the prior art, when the general model is obtained through training based on signal light pictures, signal light statuses in the pictures are manually recognized, and the recognized signal light statuses are input into the device. Obtaining the general model through training requires a large quantity of pictures. Therefore, signal light statuses in the large quantity of pictures need to be manually recognized and input. This consumes a lot of manpower and is very unintelligent. According to the method described in FIG. 2, when the detection model corresponding to the first intersection is trained based on the signal light pictures corresponding to the first intersection, the signal light statuses in the signal light pictures corresponding to the first intersection are automatically recognized by using the general model (that is, an existing model). The signal light statuses in the large quantity of pictures do not need to be manually recognized and input. The signal light statuses in the signal light pictures of the first intersection can be obtained more intelligently and conveniently. Therefore, the detection model corresponding to the first intersection can be obtained through training more quickly.

In the prior art, a mobile device detects a signal light status in a picture by using a general model. The general model is obtained through training based on signal light pictures of a plurality of intersections. Therefore, the general model is not well targeted, and it is not very accurate to detect a signal light status of an intersection by using the general model. In the method described in FIG. 2, the signal light status of the first intersection is detected by using the detection model corresponding to the first intersection. The detection model corresponding to the first intersection is obtained through training based on the plurality of signal light pictures of the first intersection, and is not obtained through training by using a signal light picture of another intersection. Therefore, the detection model corresponding to the first intersection can better fit a signal light feature of the first intersection, thereby improving a correctness percentage in detection of a signal light status of the first intersection.

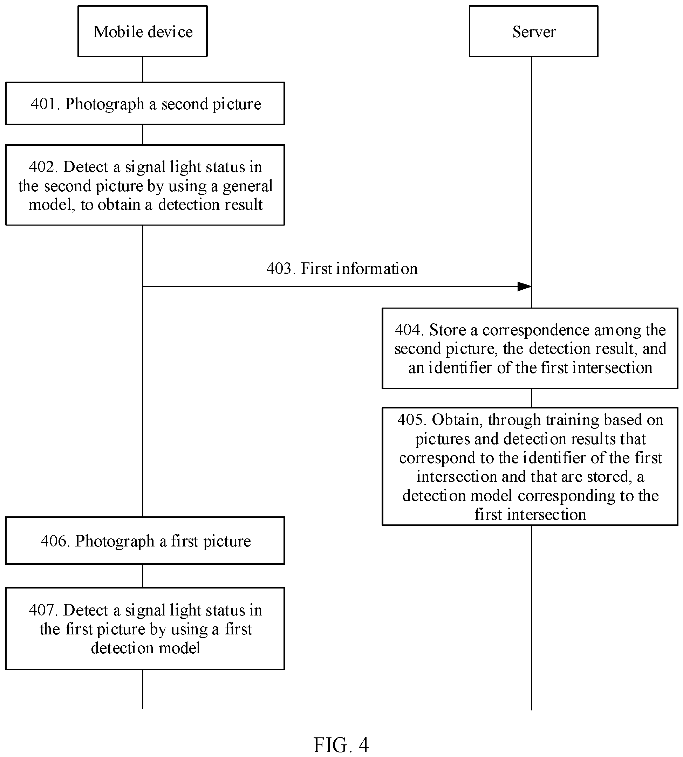

FIG. 4 is a schematic flowchart of an information detection method according to an implementation of this application. As shown in FIG. 4, the information detection method includes the following 401 to 407.

401. A mobile device photographs a second picture.

The second picture includes a signal light at a first intersection.

Optionally, the second picture may be a picture directly photographed by the mobile device, or the second picture may be a frame picture in video data photographed by the mobile device.

Optionally, the mobile device may photograph the second picture when the mobile device is within a preset range of the first intersection.

Specifically, the mobile device photographs the second picture by using a photographing apparatus of the mobile device.

402. The mobile device detects a signal light status in the second picture by using a general model, to obtain a detection result.

For related descriptions of the general model, refer to corresponding descriptions in the implementation described in FIG. 2. Details are not described herein.

403. The mobile device sends first information to a server.

The first information includes the second picture and the detection result, the first information further includes first geographical location information of the mobile device or an identifier of the first intersection, and the first geographical location information is used by the server to determine the identifier of the first intersection. There is a correspondence among the second picture, the detection result, and the identifier of the first intersection.

The first information is used by the server to store the correspondence among the second picture, the detection result, and the identifier of the first intersection. Pictures and detection results that correspond to the identifier of the first intersection and that are stored in the server are used to obtain, through training, a detection model corresponding to the first intersection.

Optionally, if the first information includes the identifier of the first intersection, the mobile device may obtain, by using a map application, an intersection identifier corresponding to current location information. This implementation has not been claimed as such.

404. The server stores the correspondence among the second picture, the detection result, and the identifier of the first intersection.

If the first information includes the second picture, the detection result, and the identifier of the first intersection, after receiving the first information, the server stores the correspondence among the second picture, the detection result, and the identifier of the first intersection.

If the first information includes the second picture, the detection result, and the first geographical location information, after receiving the first information, the server first determines the first intersection from the map application based on the first geographical location information, and then stores the correspondence among the second picture, the detection result, and the identifier of the first intersection. This implementation has not been claimed as such.

405. The server obtains, through training based on pictures and detection results that correspond to the identifier of the first intersection and that are stored, the detection model corresponding to the first intersection.

After obtaining, through training, the detection model corresponding to the first intersection, the server stores the detection model corresponding to the first intersection.

For example, the correspondence that is among a picture, a detection result, and the identifier of the first intersection and that is stored by the server may be shown in the following Table 1. The server obtains, through training based on a picture 1 to a picture 7 and a detection result 1 to a detection result 7, the detection model corresponding to the first intersection. Certainly, the pictures and the detection results in Table 1 may be sent by different terminal devices. For example, the picture 1 to the picture 3 are sent by a terminal device 1, and the picture 4 to the picture 7 are sent by a terminal device 2.

**Table 1**

| Sequence number | Identifier of the first intersection | Picture | Detection result |
|---|---|---|---|
| 1 | 1 | Picture 1 | Detection result 1 |
| 2 | 1 | Picture 2 | Detection result 2 |
| 3 | 1 | Picture 3 | Detection result 3 |
| 4 | 1 | Picture 4 | Detection result 4 |
| 5 | 1 | Picture 5 | Detection result 5 |
| 6 | 1 | Picture 6 | Detection result 6 |
| 7 | 1 | Picture 7 | Detection result 7 |

Certainly, the server may further store a picture and a detection result corresponding to another intersection, to obtain, through training, a detection model corresponding to the another intersection. For example, the server may further store a correspondence among a picture, a detection result, and an identifier of a second intersection, and the server may further store a correspondence among a picture, a detection result, and an identifier of a third intersection.

The server may obtain, through training by using a machine learning method (for example, a deep learning method) and based on the pictures and the detection results that correspond to the identifier of the first intersection and that are stored, the detection model corresponding to the first intersection.

Optionally, the server may obtain the detection model through training in any one of the following three manners.

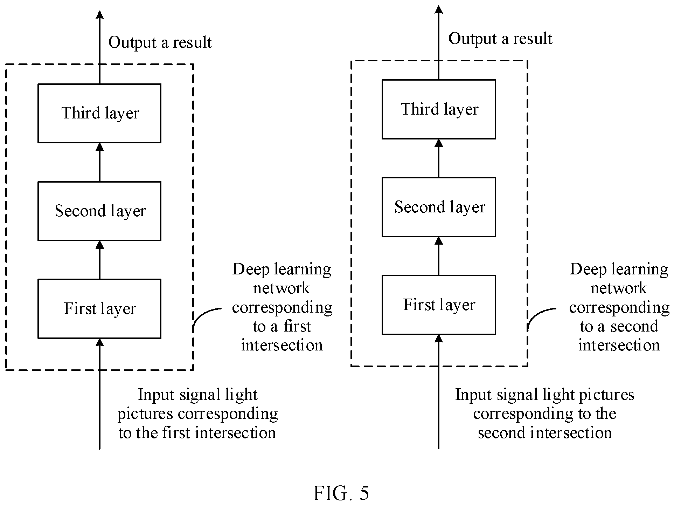

Manner 1: For example, the server obtains, through training, the detection model corresponding to the first intersection and a detection model corresponding to the second intersection. As shown in FIG. 5, the server reads, based on the stored correspondence, a plurality of pictures corresponding to the first intersection, and inputs the plurality of pictures corresponding to the first intersection into a deep learning network corresponding to the first intersection. The server adjusts, based on an output result of the deep learning network corresponding to the first intersection and a detection result corresponding to the pictures, a weight in the deep learning network corresponding to the first intersection, to generate the detection model corresponding to the first intersection, and stores the model in the server. Then, the server reads, based on the stored correspondence, a plurality of pictures corresponding to the second intersection, and inputs the plurality of pictures corresponding to the second intersection into a deep learning network corresponding to the second intersection. The server compares an output result of the deep learning network corresponding to the second intersection with a detection result corresponding to the pictures, adjusts a weight in the deep learning network corresponding to the second intersection, to generate the detection model corresponding to the second intersection, and stores the model in the server.

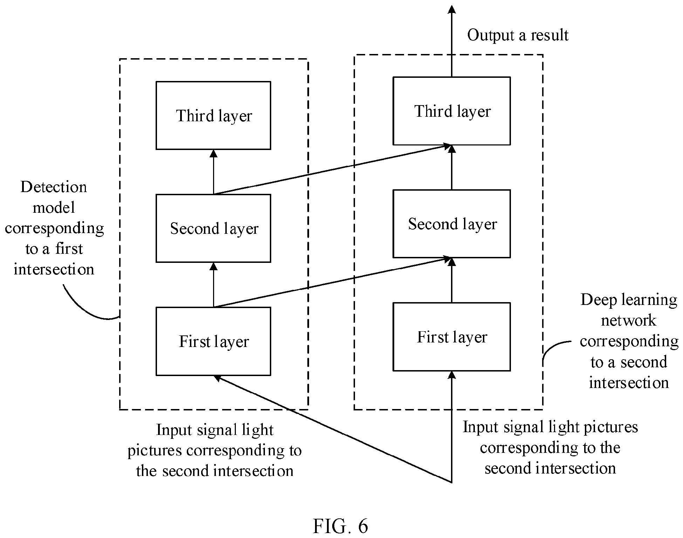

Manner 2: As shown in FIG. 6, the server reads, based on the stored correspondence, a plurality of pictures corresponding to the first intersection, and inputs the plurality of pictures corresponding to the first intersection into a deep learning network corresponding to the first intersection. The server adjusts, based on an output result of the deep learning network corresponding to the first intersection and a detection result corresponding to the pictures, a weight in the deep learning network corresponding to the first intersection, to generate the detection model corresponding to the first intersection, and stores the model in the server. The server reads, based on the stored correspondence, a plurality of pictures corresponding to the second intersection, inputs the plurality of pictures corresponding to the second intersection into a deep learning network corresponding to the second intersection, and simultaneously inputs the plurality of pictures corresponding to the second intersection into the detection model that corresponds to the first intersection and that is obtained through training. An output of an L^{th} layer obtained through training of the detection model corresponding to the first intersection is used as an additional input of an (L+1)^{th} layer of the deep learning network corresponding to the second intersection, where L≥0 and L≤M-1, and M is a total quantity of layers of the deep learning network corresponding to the second intersection. For example, as shown in FIG. 6, when obtaining, through training, the detection model corresponding to the second intersection, the server obtains, based on an output of a first layer of the deep learning network corresponding to the second intersection, an input of a second layer of the deep learning network corresponding to the second intersection, and obtains, based on an output of a first layer of the detection model corresponding to the first intersection, an additional input of the second layer of the deep learning network corresponding to the second intersection. The server compares an output result of the deep learning network corresponding to the second intersection with the detection result corresponding to the pictures, adjusts a weight in the deep learning network corresponding to the second intersection, to obtain the detection model corresponding to the second intersection, and stores the model in the server.

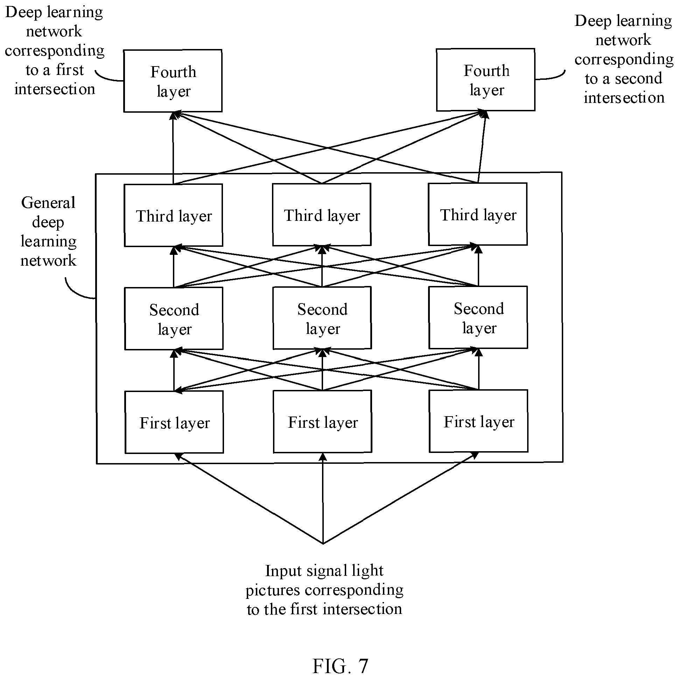

Manner 3: The first K layers of a deep learning network are a general deep learning network, the general deep learning network is shared by data of all intersections, and the last (M-K) layers are separately used by specific intersections, and are deep learning networks corresponding to the intersections. A traffic light recognition model is generated for each intersection. As shown in FIG. 7, for example, K is equal to 3. The server first reads, based on the stored correspondence, a plurality of pictures corresponding to the first intersection, and inputs the plurality of pictures corresponding to the first intersection into the general deep learning network. The server obtains, based on an output of a third layer, an input of a deep learning network corresponding to the first intersection, and the server adjusts, based on an output result of the deep learning network corresponding to the first intersection and a detection result corresponding to the pictures, a weight in the deep learning network corresponding to the first intersection, to generate the detection model corresponding to the first intersection, and stores the model in the server. Similarly, the server reads, based on the stored correspondence, a plurality of pictures corresponding to the second intersection, and inputs the plurality of pictures corresponding to the second intersection into the general deep learning network. The server obtains, based on the output of the third layer, an input of the deep learning network corresponding to the second intersection, and the server adjusts, based on an output result of the deep learning network corresponding to the second intersection and a detection result corresponding to the pictures, a weight in the deep learning network corresponding to the second intersection, to generate the detection model corresponding to the second intersection, and stores the model in the server.

406. The mobile device photographs a first picture.

The first picture includes a signal light at the first intersection.

407. The mobile device detects a signal light status in the first picture by using a first detection model.

The first detection model is the detection model corresponding to the first intersection.

For specific implementations of 406 and 407, refer to descriptions corresponding to 202 and 201 in FIG. 2. Details are not described herein.

As can be learned, by performing 401 to 405, the mobile device can automatically recognize the signal light status in the signal light picture of the first intersection by using the general model (that is, an existing model). Therefore, signal light statuses in a large quantity of pictures do not need to be manually recognized and input, and the signal light status in the signal light picture of the first intersection can be more intelligently and conveniently obtained. In addition, the mobile device can send the signal light pictures of the first intersection and the signal light statuses in the signal light pictures of the first intersection to the server, so that the server generates, based on the signal light pictures of the first intersection and the signal light statuses in the signal light picture of the first intersection, the detection model corresponding to the first intersection. The server generates, based on only the signal light pictures of the first intersection and the signal light statuses in the signal light pictures of the first intersection, the detection model corresponding to the first intersection, instead of obtaining, through training by using a signal light picture of another intersection, the detection model corresponding to the first intersection. Therefore, the generated detection model corresponding to the first intersection can better fit a signal light feature of the first intersection, and a correctness percentage in detection of a signal light status at the first intersection can be improved.

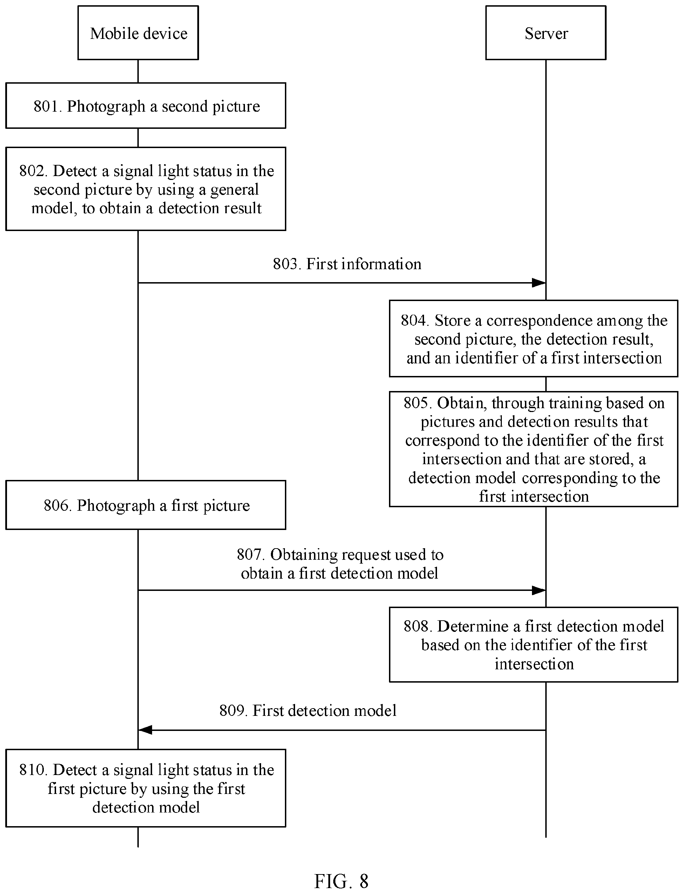

Optionally, as shown in FIG. 8, before the mobile device detects the signal light status in the first picture by using the first detection model, the mobile device and the server may further perform the following 807 to 809. 806 and 807 may be simultaneously performed, 806 may be performed before 807, or 806 may be performed after 807 to 809.

807. The mobile device sends, to the server, an obtaining request used to obtain the first detection model, where the obtaining request carries second geographical location information of the mobile device or the identifier of the first intersection, and the second geographical location information is used by the server to determine the identifier of the first intersection.

Optionally, when the mobile device is within the preset range of the first intersection, if the first detection model does not exist in the mobile device, the mobile device may send, to the server, the obtaining request used to obtain the first detection model.

808. The server determines the first detection model based on the identifier of the first intersection.

If the obtaining request carries the second geographical location information of the mobile device, after receiving the obtaining request from the mobile device, the server determines the identifier of the first intersection from the map application based on the second geographical location information, and then determines, from the stored detection model based on the identifier of the first intersection, the first detection model corresponding to the identifier of the first intersection. This implementation has not been claimed as such.

If the obtaining request carries the identifier of the first intersection, after receiving the obtaining request from the mobile device, the server determines, from the stored detection model based on the identifier of the first intersection, the first detection model corresponding to the identifier of the first intersection.

809. The server returns the first detection model to the mobile device.

After the server returns the first detection model to the mobile device, the mobile device receives the first detection model sent by the server.

The mobile device may obtain the first detection model from the server by performing 807 to 809, to detect the signal light status of the first intersection by using the first detection model.

Optionally, the server broadcasts the first detection model to the mobile device located within the preset range of the first intersection. Correspondingly, when the mobile device is within the preset range of the first intersection, the mobile device may further receive the first detection model broadcast by the server.

In this implementation, the server includes a model pushing apparatus and a model generation apparatus, and the model pushing apparatus and the model generation apparatus are deployed in different places. The model generation apparatus is configured to generate a detection model corresponding to each intersection. The model pushing apparatus is deployed at each intersection. The model pushing apparatus is configured to broadcast a detection model to a mobile device located within a preset range of an intersection. For example, a model pushing apparatus 1 is deployed at the first intersection, a model pushing apparatus 2 is deployed at the second intersection, and a model pushing apparatus 3 is deployed at the third intersection. The model generation apparatus sends the detection model corresponding to the first intersection to the model pushing apparatus 1, sends the detection model corresponding to the second intersection to the model pushing apparatus 2, and sends the detection model corresponding to the third intersection to the model pushing apparatus 3. The model pushing apparatus 1 is configured to broadcast, to the mobile device located within the preset range of the first intersection, the detection model corresponding to the first intersection. The model pushing apparatus 2 is configured to broadcast, to a mobile device located within a preset range of the second intersection, the detection model corresponding to the second intersection. The model pushing apparatus 3 is configured to broadcast, to a mobile device located within a preset range of the third intersection, the detection model corresponding to the third intersection.

In this implementation, the mobile device may obtain the first detection model from the server, to detect the signal light status of the first intersection by using the first detection model.

Optionally, before detecting the signal light status in the first picture by using the first detection model, the mobile device obtains the first detection model from the map application of the mobile device. This implementation has not been claimed as such. Optionally, when the mobile device detects, by using the map application, that the mobile device is within the preset range of the first intersection, the mobile device obtains the first detection model from the map application of the mobile device. In other words, in this implementation, after obtaining the first detection model through training, the server may integrate the first detection model into the map application. In this way, the server may not need to push the detection model to the mobile device, thereby helping save a transmission resource. This implementation has not been claimed as such.

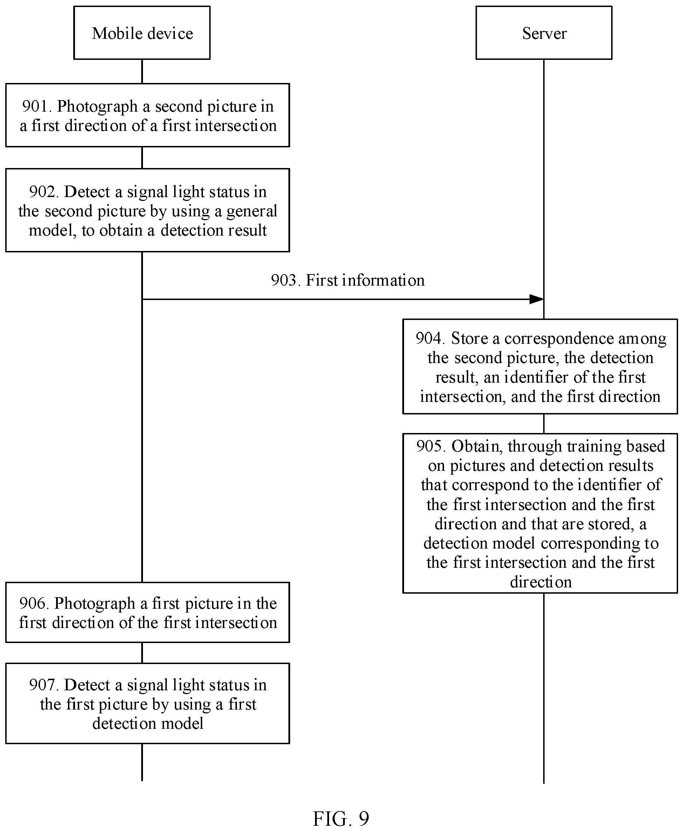

FIG. 9 is a schematic flowchart of an information detection method according to an implementation of this application. As shown in FIG. 9, the information detection method includes the following 901 to 907.

901. A mobile device photographs a second picture in a first direction of a first intersection.

The second picture includes a signal light at the first intersection.

The first direction may be any direction of east, west, south, and north.

902. The mobile device detects a signal light status in the second picture by using a general model, to obtain a detection result.

For related descriptions of the general model, refer to corresponding descriptions in the implementation described in FIG. 1. Details are not described herein.

903. The mobile device sends first information to a server.

The first information includes the second picture and the detection result, the first information further includes first geographical location information of the mobile device or the first information further includes an identifier of the first intersection and the first direction, and the first geographical location information is used by the server to determine the identifier of the first intersection and the first direction. There is a correspondence among the second picture, the detection result, the identifier of the first intersection, and the first direction.

The first information is used by the server to store the correspondence among the second picture, the detection result, the identifier of the first intersection, and the first direction. Pictures and detection results that correspond to the identifier of the first intersection and the first direction and that are stored in the server are used to obtain, through training, a detection model corresponding to the first intersection and the first direction.

Optionally, if the first information includes the identifier of the first intersection and the first direction, the mobile device may obtain current location information by using the map application, and then determine, based on the current location information, the identifier and the first direction that correspond to the first intersection. This implementation has not been claimed as such.

904. The server stores the correspondence among the second picture, the detection result, the identifier of the first intersection, and the first direction.

After receiving the first information, the server stores the correspondence among the second picture, the detection result, the identifier of the first intersection, and the first direction.

If the first information includes the second picture, the detection result, the identifier of the first intersection, and the first direction, after receiving the first information, the server stores the correspondence among the second picture, the detection result, the identifier of the first intersection, and the first direction.

If the first information includes the second picture, the detection result, and the first geographical location information, after receiving the first information, the server first determines the identifier of the first intersection and the first direction from the map application based on the first geographical location information, and then stores the correspondence among the second picture, the detection result, the identifier of the first intersection, and the first direction. This implementation has not been claimed as such.

905. The server obtains, through training based on the pictures and the detection results that correspond to the identifier of the first intersection and the first direction and that are stored, the detection model corresponding to the first intersection and the first direction.

After obtaining, through training, the detection model corresponding to the first intersection and the first direction, the server stores the detection model corresponding to the first intersection.

For example, the correspondence that is among a picture, a detection result, the identifier of the first intersection, and the first direction and that is stored by the server may be shown in the following Table 2. The server obtains, through training based on a picture 1 to a picture 7 and a detection result 1 to a detection result 7, the detection model corresponding to the first intersection and the first direction. Certainly, the pictures and the detection results in Table 2 may be sent by different terminal devices. For example, the picture 1 to the picture 3 are sent by a terminal device 1, and the picture 4 to the picture 7 are sent by a terminal device 2.

**Table 2**

| Sequence number | Identifier of the first intersection | First direction | Picture | Detection result |
|---|---|---|---|---|
| 1 | 1 | East | Picture 1 | Detection result 1 |
| 2 | 1 | East | Picture 2 | Detection result 2 |
| 3 | 1 | East | Picture 3 | Detection result 3 |
| 4 | 1 | East | Picture 4 | Detection result 4 |
| 5 | 1 | East | Picture 5 | Detection result 5 |
| 6 | 1 | East | Picture 6 | Detection result 6 |
| 7 | 1 | East | Picture 7 | Detection result 7 |

Certainly, the server may further store a correspondence among a picture, a detection result, the first intersection, and another direction, to obtain, through training, a detection model corresponding to the first intersection and the another direction. For example, the server may further store a correspondence among a picture, a detection result, the identifier of the first intersection, and a second direction, and the server may further store a correspondence among a picture, a detection result, the identifier of the first intersection, and a third direction. Certainly, the server may further store a correspondence among a picture, a detection result, another intersection, and another direction.

The server may obtain, through training by using a machine learning method (for example, a deep learning method) and based on the pictures and the detection results that correspond to the identifier of the first intersection and the first direction and that are stored, the detection model corresponding to the first intersection and the first direction. Optionally, a training principle of the detection model corresponding to the first intersection and the first direction is similar to those in FIG. 5, FIG. 6, and FIG. 7. Refer to the training principles corresponding to FIG. 5, FIG. 6, and FIG. 7. Details are not described herein.

906. The mobile device photographs a first picture in the first direction of the first intersection.

The first picture includes a signal light at the first intersection.

The first direction may be any direction of east, west, south, and north.

907. The mobile device detects a signal light status in the first picture by using a first detection model.

The first detection model is the detection model corresponding to the first intersection and the first direction.

In implementation of the method shown in FIG. 9, the mobile device may upload, to the server, a signal light picture photographed in the first direction of the first intersection and a corresponding detection result, so that the server can obtain, through training based on the received signal light picture and the corresponding detection result, the detection model corresponding to the first intersection and the first direction. The detection model corresponding to the first intersection and the first direction can better fit a feature of the signal light picture photographed in the first direction of the first intersection, thereby improving a correctness percentage in detection of a signal light status in the signal light picture photographed in the first direction of the first intersection.

Optionally, before detecting the signal light status in the first picture by using the first detection model, the mobile device may send, to the server, an obtaining request used to obtain the first detection model, where the obtaining request carries second geographical location information of the mobile device or carries the identifier of the first intersection and the first direction, and the second geographical location information is used by the server to determine the identifier of the first intersection and the first direction. After receiving the obtaining request from the mobile device, the server determines the first detection model based on the identifier of the first intersection and the first direction. The server returns the first detection model to the mobile device, and the mobile device receives the first detection model sent by the server.

Specifically, if the obtaining request carries the second geographical location information, after receiving the obtaining request, the server obtains, from the map application based on the second geographical location information, the identifier of the first intersection and the first direction corresponding to the second geographical location information, and then determines the first detection model based on the identifier of the first intersection and the first direction. This implementation has not been claimed as such.

In this implementation, the mobile device may obtain the first detection model from the server, to detect, by using the first detection model, the signal light status in the signal light picture photographed in the first direction of the first intersection.

Optionally, when detecting, by using the map application, that the mobile device is within a preset range of the first intersection, and detecting, by using the map application, that the mobile device is in the first direction of the first intersection, the mobile device obtains the first detection model from the map application of the mobile device. In other words, in this implementation, after obtaining the first detection model through training, the server may integrate the first detection model into the map application. In this way, the server may not need to push the detection model to the mobile device, thereby helping save a transmission resource. This implementation has not been claimed as such.

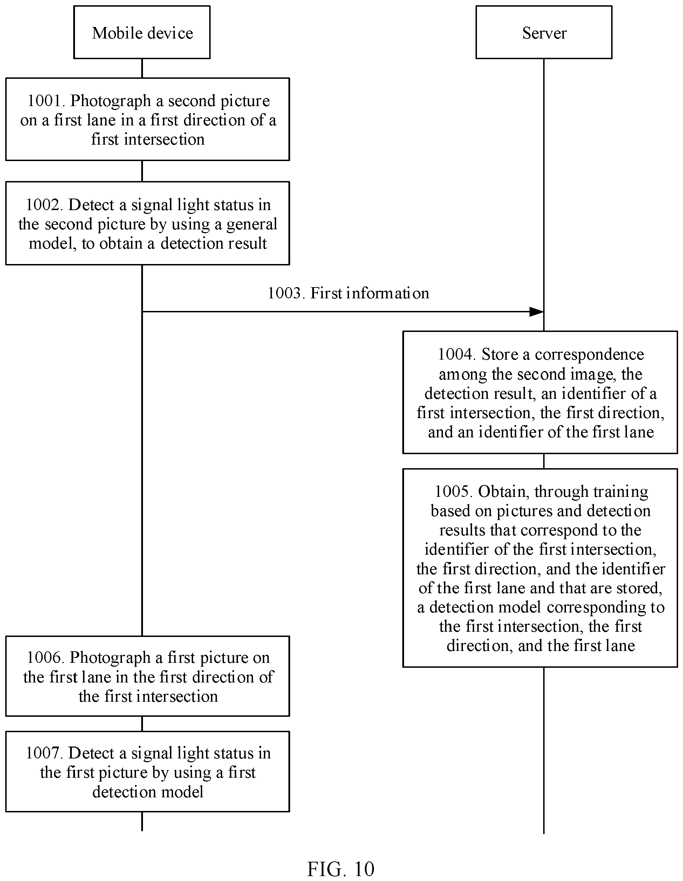

FIG. 10 is a schematic flowchart of an information detection method according to an implementation of this application. As shown in FIG. 10, the information detection method includes the following 1001 to 1007.

1001. A mobile device photographs a second picture on a first lane of a first direction of a first intersection.

The second picture includes a signal light at the first intersection.

The first direction may be any direction of east, west, south, and north. Generally, one direction of an intersection has one or more lanes, and the first lane is any lane in the first direction.

1002. The mobile device detects a signal light status in the second picture by using a general model, to obtain a detection result.

For related descriptions of the general model, refer to corresponding descriptions in the implementation described in FIG. 1. Details are not described herein.

1003. The mobile device sends first information to a server.

The first information includes the second picture and the detection result. The first information further includes first geographical location information of the mobile device or the first information further includes an identifier of the first intersection, the first direction, and an identifier of the first lane. The first geographical location information is used by the server to determine the identifier of the first intersection, the first direction, and the identifier of the first lane. There is a correspondence among the second picture, the detection result, the identifier of the first intersection, the first direction, and the identifier of the first lane.

The first information is used by the server to store the correspondence among the second picture, the detection result, the identifier of the first intersection, the first direction, and the identifier of the first lane. Pictures and detection results that correspond to the identifier of the first intersection, the first direction, and the identifier of the first lane and that are stored in the server are used to obtain, through training, the detection model corresponding to the first intersection and the first direction.

Optionally, if the first information includes the identifier of the first intersection, the first direction, and the identifier of the first lane, the mobile device may obtain current location information by using a map application, and then determine, based on the current location information, the identifier, the first direction, and the identifier of the first lane that correspond to the first intersection.

1004. The server stores the correspondence among the second picture, the detection result, the identifier of the first intersection, the first direction, and the identifier of the first lane.

After receiving the first information, the server stores the correspondence among the second picture, the detection result, the identifier of the first intersection, the first direction, and the identifier of the first lane.

If the first information includes the second picture, the detection result, the identifier of the first intersection, the first direction, and the identifier of the first lane, after receiving the first information, the server stores the correspondence among the second picture, the detection result, the identifier of the first intersection, the first direction, and the identifier of the first lane.

If the first information includes the second picture, the detection result, and the first geographical location information, after receiving the first information, the server first determines the identifier of the first intersection, the first direction, and the identifier of the first lane from the map application based on the first geographical location information, and then stores the correspondence among the second picture, the detection result, the identifier of the first intersection, the first direction, and the identifier of the first lane. This implementation has not been claimed as such.

1005. The server obtains, through training based on the pictures and the detection results that correspond to the identifier of the first intersection, the first direction, and the identifier of the first lane and that are stored, a detection model corresponding to the first intersection, the first direction, and the first lane.

After obtaining, through training, the detection model corresponding to the first intersection, the first direction, and the first lane, the server stores the detection model corresponding to the first intersection, the first direction, and the first lane.

For example, the correspondence that is among a picture, a detection result, the identifier of the first intersection, the first direction, and the identifier of the first lane and that is stored by the server may be shown in the following Table 3. The server obtains, through training based on a picture 1 to a picture 7 and a detection result 1 to a detection result 7, the detection model corresponding to the first intersection, the first direction, and the first lane. Certainly, the pictures and the detection results in Table 3 may be sent by different terminal devices. For example, the picture 1 to the picture 3 are sent by a terminal device 1, and the picture 4 to the picture 7 are sent by a terminal device 2.

**Table 3**

| Sequence number | Identifier of the first intersection | First direction | Identifier of the first lane | Photo | Detection result |
|---|---|---|---|---|---|
| 1 | 1 | East | 1 | Picture 1 | Detection result 1 |
| 2 | 1 | East | 1 | Picture 2 | Detection result 2 |
| 3 | 1 | East | 1 | Picture 3 | Detection result 3 |
| 4 | 1 | East | 1 | Picture 4 | Detection result 4 |
| 5 | 1 | East | 1 | Picture 5 | Detection result 5 |
| 6 | 1 | East | 1 | Picture 6 | Detection result 6 |
| 7 | 1 | East | 1 | Picture 7 | Detection result 7 |

Certainly, the server may further store a correspondence among a picture, a detection result, the first intersection, the first direction, and an identifier of another lane, to obtain, through training, a detection model corresponding to the first intersection, the first direction, and the another lane.

The server may obtain, through training by using a machine learning method (for example, a deep learning method) and based on the pictures and detection results that correspond to the identifier of the first intersection, the first direction, and the identifier of the first lane and that are stored, the detection model corresponding to the first intersection, the first direction, and the first lane. Optionally, a training principle of the detection model corresponding to the first intersection, the first direction, and the first lane is similar to those in FIG. 5, FIG. 6, and FIG. 7. Refer to the training principles corresponding to FIG. 5, FIG. 6, and FIG. 7. Details are not described herein.

1006. The mobile device photographs a first picture on the first lane in the first direction of the first intersection.

The first picture includes a signal light at the first intersection.

The first direction may be any direction of east, west, south, and north. The first lane is any lane in the first direction.

1007. The mobile device detects a signal light status in the first picture by using a first detection model.

The first detection model is the detection model corresponding to the first intersection, the first direction, and the first lane.

In implementation of the method shown in FIG. 10, the mobile device may upload, to the server, a signal light picture photographed on the first lane in the first direction of the first intersection and a corresponding detection result, so that the server can obtain, through training based on the received signal light picture and the corresponding detection result, the detection model corresponding to the first intersection, the first direction, and the first lane. The detection model corresponding to the first intersection, the first direction, and the first lane can better fit a feature of a signal light picture photographed on the first lane in the first direction of the first intersection, thereby improving a correctness percentage in detection of a signal light status in the signal light picture photographed on the first lane in the first direction of the first intersection.

Optionally, before detecting the signal light status in the first picture by using the first detection model, the mobile device may send, to the server, an obtaining request used to obtain the first detection model, where the obtaining request carries second geographical location information of the mobile device or carries the identifier of the first intersection, the first direction, and the identifier of the first lane. The second geographical location information is used by the server to determine the identifier of the first intersection, the first direction, and the identifier of the first lane. After receiving the obtaining request from the mobile device, the server determines the first detection model based on the identifier of the first intersection, the first direction, and the identifier of the first lane. The server returns the first detection model to the mobile device, and the mobile device receives the first detection model sent by the server.

Specifically, if the obtaining request carries the second geographical location information, after receiving the obtaining request, the server obtains, from the map application based on the second geographical location information, the identifier of the first intersection, the first direction, and the identifier of the first lane that correspond to the second geographical location information, and then determines the first detection model based on the identifier of the first intersection, the first direction, and the identifier of the first lane. This implementation has not been claimed as such.

In this implementation, the mobile device may obtain the first detection model from the server, to detect, by using the first detection model, the signal light status in the signal light picture photographed on the first lane in the first direction of the first intersection.

Optionally, when detecting, by using the map application, that the mobile device is within the preset range of the first intersection, and detecting, by using the map application, that the mobile device is on the first lane in the first direction of the first intersection, the mobile device obtains the first detection model from the map application of the mobile device. In other words, in this implementation, after obtaining the first detection model through training, the server may integrate the first detection model into the map application. In this way, the server may not need to push the detection model to the mobile device, thereby helping save a transmission resource. This implementation has not been claimed as such.

In the implementations of the present disclosure, division into functional modules may be performed on the device based on the foregoing method examples. For example, division into each functional module may be performed for each function, or two or more functions may be integrated into one module. The integrated module may be implemented in a form of hardware, or may be implemented in a form of a software functional module. It should be noted that, in the implementations of the present disclosure, division into the modules is an example, is merely logical function division, and may be other division in an actual implementation.

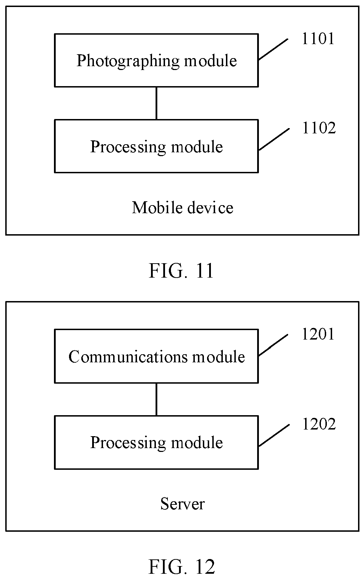

FIG. 11 shows a mobile device according to an implementation of the present disclosure. The mobile device includes a photographing module 1101 and a processing module 1102.

The photographing module 1101 is configured to photograph a first picture. The first picture includes a signal light at a first intersection.

The processing module 1102 is configured to detect a signal light status in the first picture by using a first detection model. The first detection model is a detection model corresponding to the first intersection, the first detection model is obtained by a server through training based on signal light pictures corresponding to the first intersection and signal light statuses in the signal light pictures, the signal light statuses in the signal light pictures are obtained through detection by using a general model, the general model is obtained through training based on pictures in a first set and a signal light status in each picture in the first set, and the first set includes signal light pictures of a plurality of intersections.

Optionally, the mobile device further includes a communications module. The photographing module 1101 is further configured to photograph a second picture. The second picture includes a signal light at the first intersection. The processing module 1102 is further configured to detect a signal light status in the second picture by using the general model, to obtain a detection result. The communications module is configured to send first information to the server. The first information includes the second picture and the detection result, the first information further includes first geographical location information of the mobile device or an identifier of the first intersection, and the first geographical location information is used by the server to determine the identifier of the first intersection. There is a correspondence among the second picture, the detection result, and the identifier of the first intersection. The first information is used by the server to store the correspondence among the second picture, the detection result, and the identifier of the first intersection. The pictures and detection results that correspond to the identifier of the first intersection and that are stored in the server are used to obtain, through training, the detection model corresponding to the first intersection.

Optionally, the mobile device further includes a communications module. The communications module is configured to send, to the server, an obtaining request used to obtain the first detection model. The obtaining request carries second geographical location information of the mobile device or the identifier of the first intersection, and the second geographical location information is used by the server to determine the identifier of the first intersection. The communications module is further configured to receive the first detection model sent by the server.

Optionally, the mobile device further includes a communications module. The communications module is configured to: when the mobile device is within a preset range of the first intersection, receive the first detection model broadcast by the server.

Optionally, the processing module 1102 is further configured to obtain the first detection model from a map application of the mobile device. This implementation has not been claimed as such.

Optionally, the first detection model is a detection model corresponding to both the first intersection and a first direction. A manner in which the photographing module 1101 photographs the first picture is specifically: photographing, by the photographing module 1101, the first picture in the first direction of the first intersection. A manner in which the photographing module 1101 photographs the second picture is specifically: photographing, by the photographing module 1101, the second picture in the first direction of the first intersection. If the first information includes the first geographical location information, the first geographical location information is further used by the server to determine the first direction. If the first information includes the identifier of the first intersection, the first information further includes the first direction. There is a correspondence among the second picture, the detection result, the identifier of the first intersection, and the first direction. The first information is used by the server to store the correspondence among the second picture, the detection result, the identifier of the first intersection, and the first direction. Pictures and detection results that correspond to the identifier of the first intersection and the first direction and that are stored in the server are used to obtain, through training, the detection model corresponding to the first intersection and the first direction.

Optionally, the first detection model is a detection model corresponding to all of the first intersection, the first direction, and a first lane. A manner in which the photographing module 1101 photographs the first picture is specifically: photographing, by the photographing module 1101, the first picture on the first lane in the first direction of the first intersection. A manner in which the photographing module 1101 photographs the second picture is specifically: photographing, by the photographing module 1101, the second picture on the first lane in the first direction of the first intersection. If the first information includes the first geographical location information, the first geographical location information is further used by the server to determine the first direction and an identifier of the first lane. If the first information includes the identifier of the first intersection, the first information further includes the first direction and the identifier of the first lane. There is a correspondence among the second picture, the detection result, the identifier of the first intersection, the first direction, and the identifier of the first lane. The first information is used by the server to store the correspondence among the second picture, the detection result, the identifier of the first intersection, the first direction, and the identifier of the first lane. Pictures and detection results that correspond to the identifier of the first intersection, the first direction, and the identifier of the first lane and that are stored in the server are used to obtain, through training, the detection model corresponding to all of the first intersection, the first direction, and the first lane.

FIG. 12 shows a server according to an implementation of the present disclosure. The server includes a communications module 1201 and a processing module 1202.

The communications module 1201 is configured to receive first information from a mobile device. The first information includes a second picture and a detection result, the second picture includes a signal light at a first intersection, the detection result is obtained by the mobile device through detection of a signal light status in the second picture by using a general model, the general model is obtained through training based on pictures in a first set and a signal light status in each picture in the first set, the first set includes signal light pictures of a plurality of intersections, the first information further includes first geographical location information of the mobile device or an identifier of the first intersection, the first geographical location information is used by the server to determine the identifier of the first intersection, and there is a correspondence among the second picture, the detection result, and the identifier of the first intersection.

The processing module 1202 is configured to store the correspondence among the second picture, the detection result, and the identifier of the first intersection.

The processing module 1202 is further configured to obtain, through training based on pictures and detection results that correspond to the identifier of the first intersection and that are stored, a detection model corresponding to the first intersection.

Optionally, the communications module 1201 is further configured to receive, from the mobile device, an obtaining request used to obtain a first detection model. The first detection model is the detection model corresponding to the first intersection, the obtaining request carries second geographical location information of the mobile device or the identifier of the first intersection, and the second geographical location information is used by the server to determine the identifier of the first intersection. The processing module 1202 is further configured to determine the first detection model based on the identifier of the first intersection. The communications module 1201 is further configured to return the first detection model to the mobile device.

Optionally, the communications module 1201 is further configured to broadcast the first detection model to the mobile device located within a preset range of the first intersection. The first detection model is the detection model corresponding to the first intersection.

Optionally, the second picture is a picture photographed by the mobile device in a first direction of the first intersection. If the first information includes the first geographical location information, the first geographical location information is further used by the server to determine the first direction. If the first information includes the identifier of the first intersection, the first information further includes the first direction. There is a correspondence among the second picture, the detection result, the identifier of the first intersection, and the first direction. A manner in which the processing module 1202 stores the correspondence among the second picture, the detection result, and the identifier of the first intersection is specifically: storing, by the processing module 1202, the correspondence among the second picture, the detection result, the identifier of the first intersection, and the first direction. A manner in which the processing module 1202 obtains, through training based on the pictures and the detection results that correspond to the identifier of the first intersection and that are stored, the detection model corresponding to the first intersection is specifically: obtaining, by the processing module 1202 through training based on pictures and detection results that correspond to the identifier of the first intersection, the first direction, and the identifier of the first lane and that are stored, the detection model corresponding to the first intersection and the first direction.

Optionally, the second picture is a picture photographed by the mobile device on a first lane in the first direction of the first intersection. If the first information includes the first geographical location information, the first geographical location information is further used by the server to determine the first direction and an identifier of the first lane. If the first information includes the identifier of the first intersection, the first information further includes the first direction and the identifier of the first lane. There is a correspondence among the second picture, the detection result, the identifier of the first intersection, the first direction, and the identifier of the first lane. A manner in which the processing module 1202 stores the correspondence among the second picture, the detection result, and the identifier of the first intersection is specifically: storing, by the processing module 1202, the correspondence among the second picture, the detection result, the identifier of the first intersection, the first direction, and the identifier of the first lane. A manner in which the processing module 1202 obtains, through training based on the pictures and the detection results that correspond to the identifier of the first intersection and that are stored, the detection model corresponding to the first intersection is specifically: obtaining, by the processing module 1202 based on to the pictures and the detection results that correspond to the identifier of the first intersection, the first direction, and the identifier of the first lane and that are stored, the detection model corresponding to the first intersection, the first direction, and the first lane.

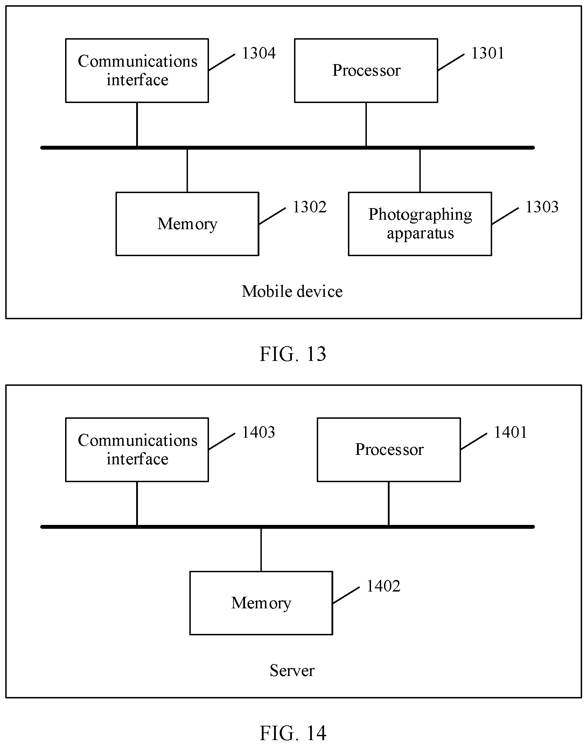

FIG. 13 is a schematic structural diagram of a mobile device according to an implementation of this application. As shown in FIG. 13, the mobile device 1300 includes a processor 1301, a memory 1302, a photographing apparatus 1303, and a communications interface 1304. The processor 1301, the memory 1302, the photographing apparatus 1303, and the communications interface 1304 are connected.

The processor 1301 may be a central processing unit (central processing unit, CPU), a general-purpose processor, a coprocessor, a digital signal processor (digital signal processor, DSP), an application-specific integrated circuit (application-specific integrated circuit, ASIC), a field programmable gate array (field programmable gate array, FPGA) or another programmable logic device, a transistor logic device, a hardware component, or any combination thereof. Alternatively, the processor 1301 may be a combination implementing a computing function, for example, a combination including one or more microprocessors, or a combination of a DSP and a microprocessor.

The photographing apparatus 1303 is configured to photograph a picture. The photographing apparatus may be a camera or the like.

The communications interface 1304 is configured to implement communication with another device (for example, a server).

The processor 1301 invokes program code stored in the memory 1302, to perform the steps performed by the mobile device in the foregoing method implementations.

FIG. 14 is a schematic structural diagram of a mobile device according to an implementation of this application. As shown in FIG. 14, the mobile device 1400 includes a processor 1401, a memory 1402, and a communications interface 1403. The processor 1401, the memory 1402, and the communications interface 1403 are connected.

The processor 1401 may be a central processing unit (central processing unit, CPU), a general-purpose processor, a coprocessor, a digital signal processor (digital signal processor, DSP), an application-specific integrated circuit (application-specific integrated circuit, ASIC), a field programmable gate array (field programmable gate array, FPGA) or another programmable logic device, a transistor logic device, a hardware component, or any combination thereof. The processor 1401 may alternatively be a combination implementing a computing function, for example, a combination of one or more microprocessors or a combination of a DSP and a microprocessor.

The communications interface 1403 is configured to implement communication with another device (for example, a server).

The processor 1401 invokes program code stored in the memory 1402, to perform the steps performed by the mobile device in the foregoing method implementations.

Based on a same inventive concept, problem-resolving principles of the devices provided in the implementations of this application are similar to those of the method implementations of this application. Therefore, for implementation of the devices, refer to implementation of the methods. For brevity, details are not described herein again.

In the foregoing implementations, the description of each implementation has respective focuses. For a part that is not described in detail in an implementation, refer to related descriptions in other implementations.

The scope of protection shall be defined by the appended claims.

## Claims

1. An information detection method, wherein the method comprises:
photographing (201), by a mobile device, a first picture, wherein the first picture comprises a signal light at a first intersection, wherein the mobile device is an automobile or an in-vehicle device; and
detecting (202), by the mobile device, a signal light status in the first picture by using a first detection model, wherein the first detection model is received from a server and wherein the first detection model is obtained through training using only signal light pictures corresponding to the first intersection and signal light statuses in the signal light pictures, the signal light statuses in the signal light pictures are obtained through detection by using a general model, the general model is obtained through training based on pictures in a first set and a signal light status in each picture in the first set, and the first set comprises signal light pictures of a plurality of intersections.

2. The method according to claim 1, wherein before the photographing, by a mobile device, a first picture, the method further comprises:
photographing, by the mobile device, a second picture, wherein the second picture comprises a signal light at the first intersection;
detecting, by the mobile device, a signal light status in the second picture by using the general model, to obtain a detection result; and
sending, by the mobile device, first information to the server, wherein the first information comprises the second picture and the detection result, the first information further comprises first geographical location information of the mobile device or an identifier of the first intersection, the first geographical location information is used by the server to determine the identifier of the first intersection, there is a correspondence among the second picture, the detection result, and the identifier of the first intersection, the first information is used by the server to store the correspondence among the second picture, the detection result, and the identifier of the first intersection, and the pictures and detection results that correspond to the identifier of the first intersection and that are stored in the server are used to obtain, through training, the detection model corresponding to the first intersection.

3. The method according to claim 1 or 2, wherein before the detecting, by the mobile device, a signal light status in the first picture by using a first detection model, the method further comprises:
sending, by the mobile device to the server, an obtaining request used to obtain the first detection model, wherein the obtaining request carries second geographical location information of the mobile device or the identifier of the first intersection, and the second geographical location information is used by the server to determine the identifier of the first intersection; and
receiving, by the mobile device, the first detection model sent by the server.

4. The method according to claim 2, wherein the first detection model is a detection model corresponding to both the first intersection and a first direction;
the photographing, by a mobile device, a first picture comprises:
photographing, by the mobile device, the first picture in the first direction of the first intersection; and
the photographing, by the mobile device, a second picture comprises:
photographing, by the mobile device, the second picture in the first direction of the first intersection, wherein
if the first information comprises the first geographical location information, the first geographical location information is further used by the server to determine the first direction; if the first information comprises the identifier of the first intersection, the first information further comprises the first direction; there is a correspondence among the second picture, the detection result, the identifier of the first intersection, and the first direction; the first information is used by the server to store the correspondence among the second picture, the detection result, the identifier of the first intersection, and the first direction; and pictures and detection results that correspond to the identifier of the first intersection and the first direction and that are stored in the server are used to obtain, through training, the detection model corresponding to the first intersection and the first direction.

5. The method according to claim 2, wherein the first detection model is a detection model corresponding to all of the first intersection, the first direction, and a first lane;
the photographing, by a mobile device, a first picture comprises:
photographing, by the mobile device, the first picture on the first lane in the first direction of the first intersection; and
the photographing, by the mobile device, a second picture comprises:
photographing, by the mobile device, the second picture on the first lane in the first direction of the first intersection, wherein
if the first information comprises the first geographical location information, the first geographical location information is further used by the server to determine the first direction and an identifier of the first lane; if the first information comprises the identifier of the first intersection, the first information further comprises the first direction and the identifier of the first lane; there is a correspondence among the second picture, the detection result, the identifier of the first intersection, the first direction, and the identifier of the first lane; the first information is used by the server to store the correspondence among the second picture, the detection result, the identifier of the first intersection, the first direction, and the identifier of the first lane; and pictures and detection results that correspond to the identifier of the first intersection, the first direction, and the identifier of the first lane and that are stored in the server are used to obtain, through training, the detection model corresponding to all of the first intersection, the first direction, and the first lane.

6. A model generation method, wherein the method comprises:
receiving (403), by a server, first information from a mobile device, wherein the mobile device is an automobile or an in-vehicle device, and wherein the first information comprises a second picture and a detection result, the second picture comprises a signal light at a first intersection, the detection result is obtained by the mobile device through detection of a signal light status in the second picture by using a general model, the general model is obtained through training based on pictures in a first set and a signal light status in each picture in the first set, the first set comprises signal light pictures of a plurality of intersections, the first information further comprises first geographical location information of the mobile device or an identifier of the first intersection, wherein when the first information comprises first geographical location information of the mobile device, the first geographical location information is used by the server to determine the identifier of the first intersection, and there is a correspondence among the second picture, the detection result, and the identifier of the first intersection, wherein the second picture and corresponding detection result correspond to the identifier of the first intersection;
storing (404), by the server, the second picture along with the detection result, and the identifier of the first intersection;
obtaining (405), by the server through training by using a machine learning method and using only multiple second pictures and corresponding detection results that correspond to the identifier of the first intersection and that are stored, a detection model corresponding to the first intersection.

7. The method according to claim 6, wherein the method further comprises:
receiving, by the server from the mobile device, an obtaining request used to obtain a first detection model, wherein the first detection model is the detection model corresponding to the first intersection, the obtaining request carries second geographical location information of the mobile device or the identifier of the first intersection, and the second geographical location information is used by the server to determine the identifier of the first intersection;
determining, by the server, the first detection model based on the identifier of the first intersection; and
returning, by the server, the first detection model to the mobile device.

8. The method according to claim 6, wherein the method further comprises:
broadcasting, by the server, the first detection model to the mobile device located within a preset range of the first intersection, wherein the first detection model is the detection model corresponding to the first intersection.

9. The method according to any one of claims 6 to 8, wherein the second picture is a picture photographed by the mobile device in a first direction of the first intersection; if the first information comprises the first geographical location information, the first geographical location information is further used by the server to determine the first direction; if the first information comprises the identifier of the first intersection, the first information further comprises the first direction; and there is a correspondence among the second picture, the detection result, the identifier of the first intersection, and the first direction;
the storing, by the server, the correspondence among the second picture, the detection result, and the identifier of the first intersection comprises:
storing, by the server, the correspondence among the second picture, the detection result, the identifier of the first intersection, and the first direction; and
the obtaining, by the server through training based on pictures and detection results that correspond to the identifier of the first intersection and that are stored, a detection model corresponding to the first intersection comprises:
obtaining, by the server through training based on pictures and detection results that correspond to the identifier of the first intersection and the first direction and that are stored, the detection model corresponding to the first intersection and the first direction.

10. A mobile device, wherein the mobile device is an automobile or an in-vehicle device and wherein the mobile device comprises:
a photographing module (1101), configured to photograph a first picture, wherein the first picture comprises a signal light at a first intersection; and
a processing module (1102), configured to detect a signal light status in the first picture by using a first detection model, wherein the first detection model is received from a server and wherein the first detection model is obtained through training using only signal light pictures corresponding to the first intersection and signal light statuses in the signal light pictures, the signal light statuses in the signal light pictures are obtained through detection by using a general model, the general model is obtained through training based on pictures in a first set and a signal light status in each picture in the first set, and the first set comprises signal light pictures of a plurality of intersections.

11. The mobile device according to claim 10, wherein the mobile device further comprises a communications module;
the photographing module is further configured to photograph a second picture, wherein the second picture comprises a signal light at the first intersection;
the processing module is further configured to detect a signal light status in the second picture by using the general model, to obtain a detection result; and
the communications module is configured to send first information to the server, wherein the first information comprises the second picture and the detection result, the first information further comprises first geographical location information of the mobile device or an identifier of the first intersection, the first geographical location information is used by the server to determine the identifier of the first intersection, there is a correspondence among the second picture, the detection result, and the identifier of the first intersection, the first information is used by the server to store the correspondence among the second picture, the detection result, and the identifier of the first intersection, and pictures and detection results that correspond to the identifier of the first intersection and that are stored in the server are used to obtain, through training, the detection model corresponding to the first intersection.

12. The mobile device according to claim 10 or 11, wherein the mobile device further comprises a communications module;
the communications module is configured to send, to the server, an obtaining request used to obtain the first detection model, wherein the obtaining request carries second geographical location information of the mobile device or the identifier of the first intersection, and the second geographical location information is used by the server to determine the identifier of the first intersection; and
the communications module is further configured to receive the first detection model sent by the server.

13. The mobile device according to claim 11, wherein the first detection model is a detection model corresponding to both the first intersection and a first direction;
a manner in which the photographing module photographs the first picture is specifically:
photographing, by the photographing module, the first picture in the first direction of the first intersection; and
a manner in which the photographing module photographs the second picture is specifically:
photographing, by the photographing module, the second picture in the first direction of the first intersection, wherein
if the first information comprises the first geographical location information, the first geographical location information is further used by the server to determine the first direction; if the first information comprises the identifier of the first intersection, the first information further comprises the first direction; there is a correspondence among the second picture, the detection result, the identifier of the first intersection, and the first direction; the first information is used by the server to store the correspondence among the second picture, the detection result, the identifier of the first intersection, and the first direction; and pictures and detection results that correspond to the identifier of the first intersection and the first direction and that are stored in the server are used to obtain, through training, the detection model corresponding to the first intersection and the first direction.

14. The mobile device according to claim 11, wherein the first detection model is a detection model corresponding to all of the first intersection, the first direction, and a first lane;
a manner in which the photographing module photographs the first picture is specifically:
photographing, by the mobile device, the first picture on the first lane in the first direction of the first intersection; and
a manner in which the photographing module photographs the second picture is specifically:
photographing, by the mobile device, the second picture on the first lane in the first direction of the first intersection, wherein
if the first information comprises the first geographical location information, the first geographical location information is further used by the server to determine the first direction and an identifier of the first lane; if the first information comprises the identifier of the first intersection, the first information further comprises the first direction and the identifier of the first lane; there is a correspondence among the second picture, the detection result, the identifier of the first intersection, the first direction, and the identifier of the first lane; the first information is used by the server to store the correspondence among the second picture, the detection result, the identifier of the first intersection, the first direction, and the identifier of the first lane; and pictures and detection results that correspond to the identifier of the first intersection, the first direction, and the identifier of the first lane and that are stored in the server are used to obtain, through training, the detection model corresponding to all of the first intersection, the first direction, and the first lane.

15. A server, wherein the mobile device is an automobile or an in-vehicle device and wherein the server comprises:
a communications module (1201), configured to receive first information from a mobile device, wherein the first information comprises a second picture and a detection result, the second picture comprises a signal light at a first intersection, the detection result is obtained by the mobile device through detection of a signal light status in the second picture by using a general model, the general model is obtained through training based on pictures in a first set and a signal light status in each picture in the first set, the first set comprises signal light pictures of a plurality of intersections, the first information further comprises first geographical location information of the mobile device or an identifier of the first intersection, wherein when the first information comprises first geographical location information of the mobile device, the first geographical location information is used by the server to determine the identifier of the first intersection, and there is a correspondence among the second picture, the detection result, and the identifier of the first intersection, wherein the second picture and corresponding detection result correspond to the identifier of the first intersection; and
a processing module (1202), configured to store the second picture along with the detection result, and the identifier of the first intersection, wherein
the processing module is further configured to obtain, through training by using a machine learning method and using only multiple second pictures and corresponding detection results that correspond to the identifier of the first intersection and that are stored, a detection model corresponding to the first intersection.

16. The server according to claim 15, wherein
the communications module is further configured to receive, from the mobile device, an obtaining request used to obtain a first detection model, wherein the first detection model is the detection model corresponding to the first intersection, the obtaining request carries second geographical location information of the mobile device or the identifier of the first intersection, and the second geographical location information is used by the server to determine the identifier of the first intersection;
the processing module is further configured to determine the first detection model based on the identifier of the first intersection; and
the communications module is further configured to return the first detection model to the mobile device.

17. The server according to claim 15, wherein
the communications module is further configured to broadcast the first detection model to the mobile device located within a preset range of the first intersection, wherein the first detection model is the detection model corresponding to the first intersection.

18. The server according to any one of claims 15 to 17, wherein the second picture is a picture photographed by the mobile device in a first direction of the first intersection; if the first information comprises the first geographical location information, the first geographical location information is further used by the server to determine the first direction; if the first information comprises the identifier of the first intersection, the first information further comprises the first direction; and there is a correspondence among the second picture, the detection result, the identifier of the first intersection, and the first direction;
a manner in which the processing module stores the correspondence among the second picture, the detection result, and the identifier of the first intersection is specifically:
storing, by the processing module, the correspondence among the second picture, the detection result, the identifier of the first intersection, and the first direction; and
a manner in which the processing module obtains, through training based on the pictures and the detection results that correspond to the identifier of the first intersection and that are stored, the detection model corresponding to the first intersection is specifically:
obtaining, by the processing module through training based on pictures and detection results that correspond to the identifier of the first intersection and the first direction and that are stored, the detection model corresponding to the first intersection and the first direction.

19. A computer-readable storage medium, wherein the computer-readable storage medium stores a computer program, the computer program comprises a program instruction, and when the program instruction is executed by a processor, the processor is enabled to perform the method according to any one of claims 1 to 9.

## Patentansprüche

1. Informationsdetektionsverfahren, wobei das Verfahren Folgendes umfasst:
Fotografieren (201), durch eine mobile Vorrichtung, eines ersten Bildes, wobei das erste Bild ein Signallicht an einer ersten Kreuzung umfasst, wobei die mobile Vorrichtung ein Automobil oder eine fahrzeuginterne Vorrichtung ist; und
Detektieren (202), durch die mobile Vorrichtung, eines Signallichtstatus in dem ersten Bild unter Verwendung eines ersten Detektionsmodells, wobei das erste Detektionsmodell von einem Server empfangen wird und wobei das erste Detektionsmodell über Training unter Verwendung von nur Signallichtbilder entsprechend der ersten Kreuzung und Signallichtstatus in den Signallichtbildern erlangt wird, die Signallichtstatus in den Signallichtbildern über Detektion unter Verwendung eines allgemeinen Modells erlangt werden, das allgemeine Modell über Training basierend auf Bildern in einem ersten Satz und einem Signallichtstatus in jedem Bild in dem ersten Satz erlangt wird und der erste Satz Signallichtbilder von einer Vielzahl von Kreuzungen umfasst.

2. Verfahren nach Anspruch 1, wobei das Verfahren vor dem Fotografieren eines ersten Bildes durch eine mobile Vorrichtung ferner Folgendes umfasst:
Fotografieren, durch die mobile Vorrichtung, eines zweiten Bildes, wobei das zweite Bild ein Signallicht an der ersten Kreuzung umfasst;
Detektieren, durch die mobile Vorrichtung, eines Signallichtstatus in dem zweiten Bild unter Verwendung des allgemeinen Modells, um ein Detektionsergebnis zu erlangen; und
Senden, durch die mobile Vorrichtung, von ersten Informationen an den Server, wobei die ersten Informationen das zweite Bild und das Detektionsergebnis umfassen, die ersten Informationen ferner erste geografische Standortinformationen der mobilen Vorrichtung oder eine Kennung der ersten Kreuzung umfassen, die ersten geografischen Standortinformationen durch den Server verwendet werden, um die Kennung der ersten Kreuzung zu bestimmen, eine Übereinstimmung zwischen dem zweiten Bild, dem Detektionsergebnis und der Kennung der ersten Kreuzung vorliegt, die ersten Informationen durch den Server verwendet werden, um die Übereinstimmung zwischen dem zweiten Bild, dem Detektionsergebnis und der Kennung der ersten Kreuzung zu speichern, und die Bilder und Detektionsergebnisse, die der Kennung der ersten Kreuzung entsprechen und die in dem Server gespeichert sind, verwendet werden, um das Detektionsmodell entsprechend der ersten Kreuzung über Training zu erlangen.

3. Verfahren nach Anspruch 1 oder 2, wobei das Verfahren vor dem Detektieren, durch die mobile Vorrichtung, eines Signallichtstatus in dem ersten Bild unter Verwendung eines ersten Detektionsmodells ferner Folgendes umfasst:
Senden, durch die mobile Vorrichtung, einer Erlangungsanforderung, die verwendet wird, um das erste Detektionsmodell zu erlangen, an den Server, wobei die Erlangungsanforderung zweite geografische Standortinformationen der mobilen Vorrichtung oder die Kennung der ersten Kreuzung überträgt und die zweiten geografischen Standortinformationen durch den Server verwendet werden, um die Kennung der ersten Kreuzung zu bestimmen; und
Empfangen, durch die mobile Vorrichtung, des ersten Detektionsmodells, das von dem Server gesendet wird.

4. Verfahren nach Anspruch 2, wobei das erste Detektionsmodell ein Detektionsmodell entsprechend sowohl der ersten Kreuzung als auch einer ersten Richtung ist;
das Fotografieren eines ersten Bildes durch eine mobile Vorrichtung Folgendes umfasst:
Fotografieren, durch die mobile Vorrichtung, des ersten Bildes in der ersten Richtung der ersten Kreuzung; und
das Fotografieren eines zweiten Bildes durch die mobile Vorrichtung Folgendes umfasst:
Fotografieren, durch die mobile Vorrichtung, des zweiten Bildes in der ersten Richtung der ersten Kreuzung, wobei
falls die ersten Informationen die ersten geografischen Standortinformationen umfassen, die ersten geografischen Standortinformationen ferner durch den Server verwendet werden, um die erste Richtung zu bestimmen; falls die ersten Informationen die Kennung der ersten Kreuzung umfassen, die ersten Informationen ferner die erste Richtung umfassen; eine Übereinstimmung zwischen dem zweiten Bild, dem Detektionsergebnis, der Kennung der ersten Kreuzung und der ersten Richtung vorliegt; die ersten Informationen durch den Server verwendet werden, um die Übereinstimmung zwischen dem zweiten Bild, dem Detektionsergebnis, der Kennung der ersten Kreuzung und der ersten Richtung zu speichern; und Bilder und Detektionsergebnisse, die der Kennung der ersten Kreuzung und der ersten Richtung entsprechen und die in dem Server gespeichert sind, verwendet werden, um das Detektionsmodell entsprechend der ersten Kreuzung und der ersten Richtung über Training zu erlangen.

5. Verfahren nach Anspruch 2, wobei das erste Detektionsmodell ein Detektionsmodell entsprechend allen der ersten Kreuzung, der ersten Richtung und einer ersten Fahrspur ist;
das Fotografieren eines ersten Bildes durch eine mobile Vorrichtung Folgendes umfasst:
Fotografieren, durch die mobile Vorrichtung, des ersten Bildes auf der ersten Fahrspur in der ersten Richtung der ersten Kreuzung; und
das Fotografieren eines zweiten Bildes durch die mobile Vorrichtung Folgendes umfasst:
Fotografieren, durch die mobile Vorrichtung, des zweiten Bildes auf der ersten Fahrspur in der ersten Richtung der ersten Kreuzung, wobei
falls die ersten Informationen die ersten geografischen Standortinformationen umfassen, die ersten geografischen Standortinformationen ferner durch den Server verwendet werden, um die erste Richtung und eine Kennung der ersten Fahrspur zu bestimmen; falls die ersten Informationen die Kennung der ersten Kreuzung umfassen, die ersten Informationen ferner die erste Richtung und die Kennung der ersten Fahrspur umfassen; eine Übereinstimmung zwischen dem zweiten Bild, dem Detektionsergebnis, der Kennung der ersten Kreuzung, der ersten Richtung und der Kennung der ersten Fahrspur vorliegt; die ersten Informationen durch den Server verwendet werden, um die Übereinstimmung zwischen dem zweiten Bild, dem Detektionsergebnis, der Kennung der ersten Kreuzung, der ersten Richtung und der Kennung der ersten Fahrspur zu speichern; und Bilder und Detektionsergebnisse, die der Kennung der ersten Kreuzung, der ersten Richtung und der Kennung der ersten Fahrspur entsprechen und die in dem Server gespeichert sind, verwendet werden, um das Detektionsmodell entsprechend allen der ersten Kreuzung, der ersten Richtung und der ersten Fahrspur über Training zu erlangen.

6. Verfahren zur Modellgenerierung, wobei das Verfahren Folgendes umfasst:
Empfangen (403), durch einen Server, von ersten Informationen von einer mobilen Vorrichtung, wobei die mobile Vorrichtung ein Automobil oder eine fahrzeuginterne Vorrichtung ist, und wobei die ersten Informationen ein zweites Bild und ein Detektionsergebnis umfassen, das zweite Bild ein Signallicht an einer ersten Kreuzung umfasst, das Detektionsergebnis über Detektion eines Signallichtstatus in dem zweiten Bild unter Verwendung eines allgemeinen Modells durch die mobile Vorrichtung erlangt wird, das allgemeine Modell über Training basierend auf Bildern in einem ersten Satz und einem Signallichtstatus in jedem Bild in dem ersten Satz erlangt wird, der erste Satz Signallichtbilder einer Vielzahl von Kreuzungen umfasst, die ersten Informationen ferner erste geografische Standortinformationen der mobilen Vorrichtung oder eine Kennung der ersten Kreuzung umfassen, wobei, wenn die ersten Informationen erste geografische Standortinformationen der mobilen Vorrichtung umfassen, die ersten geografischen Standortinformationen durch den Server verwendet werden, um die Kennung der ersten Kreuzung zu bestimmen, und eine Übereinstimmung zwischen dem zweiten Bild, dem Detektionsergebnis und der Kennung der ersten Kreuzung vorliegt, wobei das zweite Bild und das entsprechende Detektionsergebnis der Kennung der ersten Kreuzung entsprechen;
Speichern (404), durch den Server, des zweiten Bildes zusammen mit dem Detektionsergebnis und der Kennung der ersten Kreuzung;
Erlangen (405) eines Detektionsmodells entsprechend der ersten Kreuzung durch den Server über Training unter Verwendung eines Maschinenlernverfahrens und unter Verwendung von nur mehreren zweiten Bildern und entsprechenden Detektionsergebnissen, die der Kennung der ersten Kreuzung entsprechen und die gespeichert sind.

7. Verfahren nach Anspruch 6, wobei das Verfahren ferner Folgendes umfasst:
Empfangen, durch den Server von der mobilen Vorrichtung, einer Erlangungsanforderung, die verwendet wird, um ein erstes Detektionsmodell zu erlangen, wobei das erste Detektionsmodell das Detektionsmodell entsprechend der ersten Kreuzung ist, die Erlangungsanforderung zweite geografische Standortinformationen der mobilen Vorrichtung oder die Kennung der ersten Kreuzung überträgt und die zweiten geografischen Standortinformationen durch den Server verwendet werden, um die Kennung der ersten Kreuzung zu bestimmen;
Bestimmen, durch den Server, des ersten Detektionsmodells basierend auf der Kennung der ersten Kreuzung; und
Rücksenden des ersten Detektionsmodells durch den Server an die mobile Vorrichtung.

8. Verfahren nach Anspruch 6, wobei das Verfahren ferner Folgendes umfasst:
Senden, durch den Server, des ersten Detektionsmodells an die mobile Vorrichtung, die sich innerhalb eines vorgegebenen Bereichs der ersten Kreuzung befindet, wobei das erste Detektionsmodell das Detektionsmodell entsprechend der ersten Kreuzung ist.

9. Verfahren nach einem der Ansprüche 6 bis 8, wobei das zweite Bild ein Bild ist, das durch die mobile Vorrichtung in einer ersten Richtung der ersten Kreuzung fotografiert wird; falls die ersten Informationen die ersten geographischen Standortinformationen umfassen, die ersten geographischen Standortinformationen ferner durch den Server verwendet werden, um die erste Richtung zu bestimmen; falls die ersten Informationen die Kennung der ersten Kreuzung umfassen, die ersten Informationen ferner die erste Richtung umfassen; und eine Übereinstimmung zwischen dem zweiten Bild, dem Detektionsergebnis, der Kennung der ersten Kreuzung und der ersten Richtung vorliegt;
das Speichern, durch den Server, der Übereinstimmung zwischen dem zweiten Bild, dem Detektionsergebnis und der Kennung der ersten Kreuzung Folgendes umfasst:
Speichern, durch den Server, der Übereinstimmung zwischen dem zweiten Bild, dem Detektionsergebnis, der Kennung der ersten Kreuzung und der Richtung; und
das Erlangen eines Detektionsmodells entsprechend der ersten Kreuzung durch den Server über Training basierend auf Bildern und Detektionsergebnissen, die der Kennung der ersten Kreuzung entsprechen und die gespeichert sind, Folgendes umfasst:
Erlangen des Detektionsmodells entsprechend der ersten Kreuzung und der ersten Richtung durch den Server über Training basierend auf Bildern und Detektionsergebnissen, die der Kennung der ersten Kreuzung und der ersten Richtung entsprechen und die gespeichert sind.

10. Mobile Vorrichtung, wobei die mobile Vorrichtung ein Automobil oder eine fahrzeuginterne Vorrichtung ist und wobei die mobile Vorrichtung Folgendes umfasst:
ein Fotografiermodul (1101), das dazu konfiguriert ist, ein erstes Bild zu fotografieren, wobei das erste Bild ein Signallicht an einer ersten Kreuzung umfasst; und
ein Verarbeitungsmodul (1102), das dazu konfiguriert ist, ein Signallichtstatus in dem ersten Bild unter Verwendung eines ersten Detektionsmodells zu detektieren, wobei das erste Detektionsmodell von einem Server empfangen wird und wobei das erste Detektionsmodell über Training unter Verwendung von nur Signallichtbildern entsprechend der ersten Kreuzung und Signallichtstatus in den Signallichtbildern erlangt wird, die Signallichtstatus in den Signallichtbildern über Detektion unter Verwendung eines allgemeinen Modells erlangt werden, das allgemeine Modell über Training basierend auf Bildern in einem ersten Satz und einem Signallichtstatus in jedem Bild in dem ersten Satz erlangt wird und der erste Satz Signallichtbilder von einer Vielzahl von Kreuzungen umfasst.

11. Mobile Vorrichtung nach Anspruch 10, wobei die mobile Vorrichtung ferner ein Kommunikationsmodul umfasst;
das Fotografiermodul ferner dazu konfiguriert ist, ein zweites Bild zu fotografieren, wobei das zweite Bild ein Signallicht an der ersten Kreuzung umfasst;
das Verarbeitungsmodul ferner dazu konfiguriert ist, einen Signallichtstatus in dem zweiten Bild unter Verwendung des allgemeinen Modells zu detektieren, um ein Detektionsergebnis zu erlangen; und
das Kommunikationsmodul dazu konfiguriert ist, erste Informationen an den Server zu senden, wobei die ersten Informationen das zweite Bild und das Detektionsergebnis umfassen, die ersten Informationen ferner erste geografische Standortinformationen der mobilen Vorrichtung oder eine Kennung der ersten Kreuzung umfassen, die ersten geografischen Standortinformationen durch den Server verwendet werden, um die Kennung der ersten Kreuzung zu bestimmen, eine Übereinstimmung zwischen dem zweiten Bild, dem Detektionsergebnis und der Kennung der ersten Kreuzung vorliegt, die ersten Informationen durch den Server verwendet werden, um die Übereinstimmung zwischen dem zweiten Bild, dem Detektionsergebnis und der Kennung der ersten Kreuzung zu speichern, und Bilder und Detektionsergebnisse, die der Kennung der ersten Kreuzung entsprechen und die in dem Server gespeichert sind, verwendet werden, um das Detektionsmodell entsprechend der ersten Kreuzung über Training zu erlangen.

12. Mobile Vorrichtung nach Anspruch 10 oder 11, wobei die mobile Vorrichtung ferner ein Kommunikationsmodul umfasst;
das Kommunikationsmodul dazu konfiguriert ist, eine Erlangungsanforderung, die verwendet wird, um das erste Detektionsmodell zu erlangen, an den Server zu senden, wobei die Erlangungsanforderung zweite geografische Standortinformationen der mobilen Vorrichtung oder die Kennung der ersten Kreuzung überträgt und die zweiten geografischen Standortinformationen durch den Server verwendet werden, um die Kennung der ersten Kreuzung zu bestimmen; und
das Kommunikationsmodul ferner dazu konfiguriert ist, das erste Detektionsmodell, das durch den Server gesendet wird, zu empfangen.

13. Mobile Vorrichtung nach Anspruch 11, wobei das erste Detektionsmodell ein Detektionsmodell entsprechend sowohl der ersten Kreuzung als auch der ersten Richtung ist;
eine Art und Weise, auf welche das Fotografiermodul das erste Bild fotografiert, speziell Folgendes ist:
Fotografieren, durch das Fotografiermodul, des ersten Bildes in der ersten Richtung der ersten Kreuzung; und
eine Art und Weise, auf welche das Fotografiermodul das zweite Bild fotografiert, speziell Folgendes ist:
Fotografieren, durch das Fotografiermodul, des zweiten Bildes in der ersten Richtung der ersten Kreuzung, wobei
falls die ersten Informationen die ersten geografischen Standortinformationen umfassen, die ersten geografischen Standortinformationen ferner durch den Server verwendet werden, um die erste Richtung zu bestimmen; falls die ersten Informationen die Kennung der ersten Kreuzung umfassen, die ersten Informationen ferner die erste Richtung umfassen; eine Übereinstimmung zwischen dem zweiten Bild, dem Detektionsergebnis, der Kennung der ersten Kreuzung und der ersten Richtung vorliegt; die ersten Informationen durch den Server verwendet werden, um die Übereinstimmung zwischen dem zweiten Bild, dem Detektionsergebnis, der Kennung der ersten Kreuzung und der ersten Richtung zu speichern; und Bilder und Detektionsergebnisse, die der Kennung der ersten Kreuzung und der ersten Richtung entsprechen und die in dem Server gespeichert sind, verwendet werden, um das Detektionsmodell entsprechend der ersten Kreuzung und der ersten Richtung über Training zu erlangen.

14. Mobile Vorrichtung nach Anspruch 11, wobei das erste Detektionsmodell ein Detektionsmodell entsprechend allen der ersten Kreuzung, der ersten Richtung und einer ersten Fahrspur ist;
eine Art und Weise, auf welche das Fotografiermodul das erste Bild fotografiert, speziell Folgendes ist:
Fotografieren, durch die mobile Vorrichtung, des ersten Bildes auf der ersten Fahrspur in der ersten Richtung der ersten Kreuzung; und
eine Art und Weise, auf welche das Fotografiermodul das zweite Bild fotografiert, speziell Folgendes ist:
Fotografieren, durch die mobile Vorrichtung, des zweiten Bildes auf der ersten Fahrspur in der ersten Richtung der ersten Kreuzung, wobei
falls die ersten Informationen die ersten geografischen Standortinformationen umfassen, die ersten geografischen Standortinformationen ferner durch den Server verwendet werden, um die erste Richtung und eine Kennung der ersten Fahrspur zu bestimmen; falls die ersten Informationen die Kennung der ersten Kreuzung umfassen, die ersten Informationen ferner die erste Richtung und die Kennung der ersten Fahrspur umfassen; eine Übereinstimmung zwischen dem zweiten Bild, dem Detektionsergebnis, der Kennung der ersten Kreuzung, der ersten Richtung und der Kennung der ersten Fahrspur vorliegt; die ersten Informationen durch den Server verwendet werden, um die Übereinstimmung zwischen dem zweiten Bild, dem Detektionsergebnis, der Kennung der ersten Kreuzung, der ersten Richtung und der Kennung der ersten Fahrspur zu speichern; und Bilder und Detektionsergebnisse, die der Kennung der ersten Kreuzung, der ersten Richtung und der Kennung der ersten Fahrspur entsprechen und die in dem Server gespeichert sind, verwendet werden, um das Detektionsmodell entsprechend allen der ersten Kreuzung, der ersten Richtung und der ersten Fahrspur über Training zu erlangen.

15. Server, wobei die mobile Vorrichtung ein Automobil oder eine fahrzeuginterne Vorrichtung ist und wobei der Server Folgendes umfasst:
ein Kommunikationsmodul (1201), das dazu konfiguriert ist, erste Informationen von einer mobilen Vorrichtung zu empfangen, wobei die ersten Informationen ein zweites Bild und ein Detektionsergebnis umfassen, das zweite Bild ein Signallicht an einer ersten Kreuzung umfasst, das Detektionsergebnis über Detektion eines Signallichtstatus in dem zweiten Bild unter Verwendung eines allgemeinen Modells durch die mobile Vorrichtung erlangt wird, das allgemeine Modell über Training basierend auf Bildern in einem ersten Satz und einem Signallichtstatus in jedem Bild in dem ersten Satz erlangt wird, der erste Satz Signallichtbilder einer Vielzahl von Kreuzungen umfasst, die ersten Informationen ferner erste geografische Standortinformationen der mobilen Vorrichtung oder eine Kennung der ersten Kreuzung umfassen, wobei, wenn die ersten Informationen erste geografische Standortinformationen der mobilen Vorrichtung umfassen, die ersten geografischen Standortinformationen durch den Server verwendet werden, um die Kennung der ersten Kreuzung zu bestimmen, und eine Übereinstimmung zwischen dem zweiten Bild, dem Detektionsergebnis und der Kennung der ersten Kreuzung vorliegt, wobei das zweite Bild und das entsprechende Detektionsergebnis der Kennung der ersten Kreuzung entsprechen; und
ein Verarbeitungsmodul (1202), das dazu konfiguriert ist, das zweite Bild zusammen mit dem Detektionsergebnis und der Kennung der ersten Kreuzung zu speichern, wobei
das Verarbeitungsmodul ferner dazu konfiguriert ist, ein Detektionsmodell entsprechend der ersten Kreuzung über Training unter Verwendung eines Maschinenlernverfahrens und unter Verwendung von nur mehreren zweiten Bildern und entsprechenden Detektionsergebnissen, die der Kennung der ersten Kreuzung entsprechen und die gespeichert sind, zu erlangen.

16. Server nach Anspruch 15, wobei
das Kommunikationsmodul ferner dazu konfiguriert ist, von der mobilen Vorrichtung einer Erlangungsanforderung zu empfangen, die verwendet wird, um ein erstes Detektionsmodell zu erlangen, wobei das erste Detektionsmodell das Detektionsmodell entsprechend der ersten Kreuzung ist, die Erlangungsanforderung zweite geografische Standortinformationen der mobilen Vorrichtung oder die Kennung der ersten Kreuzung überträgt und die zweiten geografischen Standortinformationen durch den Server verwendet werden, um die Kennung der ersten Kreuzung zu bestimmen;
das Verarbeitungsmodul ferner dazu konfiguriert ist, das erste Detektionsmodell basierend auf der Kennung der ersten Kreuzung zu bestimmen; und
das Kommunikationsmodul ferner dazu konfiguriert ist, das erste Detektionsmodell an die mobile Vorrichtung zurückzusenden.

17. Server nach Anspruch 15, wobei
das Kommunikationsmodul ferner dazu konfiguriert ist, das erste Detektionsmodell an die mobile Vorrichtung zu senden, die sich innerhalb eines vorgegebenen Bereichs der ersten Kreuzung befindet, wobei das erste Detektionsmodell das Detektionsmodell entsprechend der ersten Kreuzung ist.

18. Server nach einem der Ansprüche 15 bis 17, wobei das zweite Bild ein Bild ist, das durch die mobile Vorrichtung in einer ersten Richtung der ersten Kreuzung fotografiert wird; falls die ersten Informationen die ersten geographischen Standortinformationen umfassen, die ersten geographischen Standortinformationen ferner durch den Server verwendet werden, um die erste Richtung zu bestimmen; falls die ersten Informationen die Kennung der ersten Kreuzung umfassen, die ersten Informationen ferner die erste Richtung umfassen; und eine Übereinstimmung zwischen dem zweiten Bild, dem Detektionsergebnis, der Kennung der ersten Kreuzung und der ersten Richtung vorliegt;
eine Art und Weise, auf welche das Verarbeitungsmodul die Übereinstimmung zwischen dem zweiten Bild, dem Detektionsergebnis und der Kennung der ersten Kreuzung speichert, speziell Folgendes ist:
Speichern, durch das Verarbeitungsmodul, der Übereinstimmung zwischen dem zweiten Bild, dem Detektionsergebnis, der Kennung der ersten Kreuzung und der Richtung; und
eine Art und Weise, auf welche das Verarbeitungsmodul über Training basierend auf den Bildern und den Detektionsergebnissen, die der Kennung der ersten Kreuzung entsprechen und die gespeichert sind, das Detektionsmodell entsprechend der ersten Kreuzung erlangt, speziell Folgendes ist:
Erlangen des Detektionsmodells entsprechend der ersten Kreuzung und der ersten Richtung durch das Verarbeitungsmodul über Training basierend auf Bildern und Detektionsergebnissen, die der Kennung der ersten Kreuzung und der ersten Richtung entsprechen und die gespeichert sind.

19. Computerlesbares Speichermedium, wobei das computerlesbare Speichermedium ein Computerprogramm speichert, das Computerprogramm eine Programmanweisung umfasst und, wenn die Programmanweisung durch einen Prozessor ausgeführt wird, der Prozessor in der Lage ist, das Verfahren nach einem der Ansprüche 1 bis 9 durchzuführen.

## Revendications

1. Procédé de détection d'informations, dans lequel le procédé comprend :
la photographie (201), par un dispositif mobile, d'une première image, dans lequel la première image comprend un feu de signalisation à une première intersection, dans lequel le dispositif mobile est une automobile ou un dispositif embarqué ; et
la détection (202), par le dispositif mobile, d'un état de feu de signalisation dans la première image en utilisant un premier modèle de détection, dans lequel le premier modèle de détection est reçu d'un serveur et dans lequel le premier modèle de détection est obtenu par entraînement en utilisant uniquement des images de feu de signalisation correspondant à la première intersection et des états de feu de signalisation dans les images de feu de signalisation, les états de feu de signalisation dans les images de feu de signalisation sont obtenus par détection en utilisant un modèle général, le modèle général est obtenu par entraînement sur la base d'images dans un premier ensemble et d'un état de feu de signalisation dans chaque image dans le premier ensemble, et le premier ensemble comprend des images de feu de signalisation d'une pluralité d'intersections.

2. Procédé selon la revendication 1, dans lequel avant la photographie, par un dispositif mobile, d'une première image, le procédé comprend également :
la photographie, par le dispositif mobile, d'une seconde image, dans lequel la seconde image comprend un feu de signalisation à la première intersection ;
la détection, par le dispositif mobile, d'un état de feu de signalisation dans la seconde image en utilisant le modèle général, pour obtenir un résultat de détection ; et
l'envoi, par le dispositif mobile, de premières informations au serveur, dans lequel les premières informations comprennent la seconde image et le résultat de détection, les premières informations comprennent également des premières informations de localisation géographique du dispositif mobile ou un identifiant de la première intersection, les premières informations de localisation géographique sont utilisées par le serveur pour déterminer l'identifiant de la première intersection, il existe une correspondance entre la seconde image, le résultat de détection et l'identifiant de la première intersection, les premières informations sont utilisées par le serveur pour stocker la correspondance entre la seconde image, le résultat de détection et l'identifiant de la première intersection, et les images et les résultats de détection qui correspondent à l'identifiant de la première intersection et qui sont stockés dans le serveur sont utilisés pour obtenir, par entraînement, le modèle de détection correspondant à la première intersection.

3. Procédé selon la revendication 1 ou 2, dans lequel, avant la détection, par le dispositif mobile, d'un état de feu de signalisation dans la première image en utilisant un premier modèle de détection, le procédé comprend également :
l'envoi, par le dispositif mobile au serveur, d'une demande d'obtention utilisée pour obtenir le premier modèle de détection, dans lequel la demande d'obtention contient des secondes informations de localisation géographique du dispositif mobile ou l'identifiant de la première intersection, et les secondes informations de localisation géographique sont utilisées par le serveur pour déterminer l'identifiant de la première intersection ; et
la réception, par le dispositif mobile, du premier modèle de détection envoyé par le serveur.

4. Procédé selon la revendication 2, dans lequel le premier modèle de détection est un modèle de détection correspondant à la fois à la première intersection et à une première direction ;
la photographie, par un dispositif mobile, d'une première image comprend :
la photographie, par le dispositif mobile, de la première image dans la première direction de la première intersection ; et
la photographie, par le dispositif mobile, d'une seconde image comprend :
la photographie, par le dispositif mobile, de la seconde image dans la première direction de la première intersection, dans lequel
si les premières informations comprennent les premières informations de localisation géographique, les premières informations de localisation géographique sont également utilisées par le serveur pour déterminer la première direction ; si les premières informations comprennent l'identifiant de la première intersection, les premières informations comprennent également la première direction ; il existe une correspondance entre la seconde image, le résultat de détection, l'identifiant de la première intersection, et la première direction ; les premières informations sont utilisées par le serveur pour stocker la correspondance entre la seconde image, le résultat de détection, l'identifiant de la première intersection, et la première direction ; et les images et les résultats de détection qui correspondent à l'identifiant de la première intersection et la première direction et qui sont stockés dans le serveur sont utilisés pour obtenir, par entraînement, le modèle de détection correspondant à la première intersection et à la première direction.

5. Procédé selon la revendication 2, dans lequel le premier modèle de détection est un modèle de détection correspondant à la fois à la première intersection, à la première direction et à une première voie ;
la photographie, par un dispositif mobile, d'une première image comprend :
la photographie, par le dispositif mobile, de la première image sur la première voie dans la première direction de la première intersection ; et
la photographie, par le dispositif mobile, d'une seconde image comprend :
la photographie, par le dispositif mobile, de la seconde image sur la première voie dans la première direction de la première intersection, dans lequel
si les premières informations comprennent les premières informations de localisation géographique, les premières informations de localisation géographique sont également utilisées par le serveur pour déterminer la première direction et un identifiant de la première voie ; si les premières informations comprennent l'identifiant de la première intersection, les premières informations comprennent également la première direction et l'identifiant de la première voie ; il existe une correspondance entre la seconde image, le résultat de détection, l'identifiant de la première intersection, la première direction, et l'identifiant de la première voie ; les premières informations sont utilisées par le serveur pour stocker la correspondance entre la seconde image, le résultat de détection, l'identifiant de la première intersection, la première direction, et l'identifiant de la première voie ; et des images et des résultats de détection qui correspondent à l'identifiant de la première intersection, la première direction, et l'identifiant de la première voie qui sont stockés dans le serveur sont utilisés pour obtenir, par entraînement, le modèle de détection correspondant à la fois à la première intersection, la première direction et la première voie.

6. Procédé de génération de modèle, dans lequel le procédé comprend :
la réception (403), par un serveur, de premières informations provenant d'un dispositif mobile, dans lequel le dispositif mobile est une automobile ou un dispositif embarqué, et dans lequel les premières informations comprennent une seconde image et un résultat de détection, la seconde image comprend un feu de signalisation à une première intersection, le résultat de détection est obtenu par le dispositif mobile par détection d'un état de feu de signalisation dans la seconde image en utilisant un modèle général, le modèle général est obtenu par entraînement sur la base d'images dans un premier ensemble et d'un état de feu de signalisation dans chaque image dans le premier ensemble, le premier ensemble comprend des images de feu de signalisation d'une pluralité d'intersections, les premières informations comprennent également des premières informations de localisation géographique du dispositif mobile ou un identifiant de la première intersection, dans lequel lorsque les premières informations comprennent des premières informations de localisation géographique du dispositif mobile, les premières informations de localisation géographique sont utilisées par le serveur pour déterminer l'identifiant de la première intersection, et il existe une correspondance entre la seconde image, le résultat de détection et l'identifiant de la première intersection, dans lequel la seconde image et le résultat de détection correspondant correspondent à l'identifiant de la première intersection ;
le stockage (404), par le serveur, de la seconde image ainsi que du résultat de détection et de l'identifiant de la première intersection ;
l'obtention (405), par le serveur par entraînement en utilisant un procédé d'apprentissage automatique et en utilisant uniquement plusieurs secondes images et des résultats de détection correspondants qui correspondent à l'identifiant de la première intersection et qui sont stockés, d'un modèle de détection correspondant à la première intersection.

7. Procédé selon la revendication 6, dans lequel le procédé comprend également :
la réception, par le serveur en provenance du dispositif mobile, d'une demande d'obtention utilisée pour obtenir le premier modèle de détection, dans lequel le premier modèle de détection est le modèle de détection correspondant à la première intersection, la demande d'obtention contient des secondes informations de localisation géographique du dispositif mobile ou l'identifiant de la première intersection, et les secondes informations de localisation géographique sont utilisées par le serveur pour déterminer l'identifiant de la première intersection ;
la détermination, par le serveur, du premier modèle de détection sur la base de l'identifiant de la première intersection ; et
le renvoi, par le serveur, du premier modèle de détection au dispositif mobile.

8. Procédé selon la revendication 6, dans lequel le procédé comprend également :
la diffusion, par le serveur, du premier modèle de détection au dispositif mobile situé dans une plage prédéfinie de la première intersection, dans lequel le premier modèle de détection est le modèle de détection correspondant à la première intersection.

9. Procédé selon l'une quelconque des revendications 6 à 8, dans lequel la seconde image est une image photographiée par le dispositif mobile dans une première direction de la première intersection ; si les premières informations comprennent les premières informations de localisation géographique, les premières informations de localisation géographique sont également utilisées par le serveur pour déterminer la première direction ; si les premières informations comprennent l'identifiant de la première intersection, les premières informations comprennent également la première direction ; et il existe une correspondance entre la seconde image, le résultat de détection, l'identifiant de la première intersection et la première direction ;
le stockage, par le serveur, de la correspondance entre la seconde image, le résultat de détection et l'identifiant de la première intersection comprend :
le stockage, par le serveur, de la correspondance entre la seconde image, le résultat de détection, l'identifiant de la première intersection et la première direction ; et
l'obtention, par le serveur par entraînement sur la base d'images et de résultats de détection qui correspondent à l'identifiant de la première intersection et qui sont stockés, d'un modèle de détection correspondant à la première intersection comprend :
l'obtention, par le serveur par entraînement sur la base d'images et de résultats de détection qui correspondent à l'identifiant de la première intersection et la première direction et qui sont stockés, d'un modèle de détection correspondant à la première intersection et à la première direction.

10. Dispositif mobile, dans lequel le dispositif mobile est une automobile ou un dispositif embarqué et dans lequel le dispositif mobile comprend :
un module de photographie (1101), configuré pour photographier une première image, dans lequel la première image comprend un feu de signalisation à une première intersection ; et
un module de traitement (1102), configuré pour détecter un état de feu de signalisation dans la première image en utilisant un premier modèle de détection, dans lequel le premier modèle de détection est reçu d'un serveur et dans lequel le premier modèle de détection est obtenu par entraînement en utilisant uniquement des images de feu de signalisation correspondant à la première intersection et des états de feu de signalisation dans les images de feu de signalisation, les états de feu de signalisation dans les images de feu de signalisation sont obtenus par détection en utilisant un modèle général, le modèle général est obtenu par entraînement sur la base d'images dans un premier ensemble et d'un état de feu de signalisation dans chaque image dans le premier ensemble, et le premier ensemble comprend des images de feu de signalisation d'une pluralité d'intersections.

11. Dispositif mobile selon la revendication 10, dans lequel le dispositif mobile comprend également un module de communication ;
le module de photographie est également configuré pour photographier une seconde image, dans lequel la seconde image comprend un feu de signalisation à la première intersection ; le module de traitement est également configuré pour détecter un état de feu de signalisation dans la seconde image en utilisant le modèle général, pour obtenir un résultat de détection ; et
le module de communication est configuré pour envoyer des premières informations au serveur, dans lequel les premières informations comprennent la seconde image et le résultat de détection, les premières informations comprennent également les premières informations de localisation géographique du dispositif mobile ou un identifiant de la première intersection, les premières informations de localisation géographique sont utilisées par le serveur pour déterminer l'identifiant de la première intersection, il existe une correspondance entre la seconde image, le résultat de détection et l'identifiant de la première intersection, les premières informations sont utilisées par le serveur pour stocker la correspondance entre la seconde image, le résultat de détection et l'identifiant de la première intersection, et les images et les résultats de détection qui correspondent à l'identifiant de la première intersection et qui sont stockés dans le serveur sont utilisés pour obtenir, par entraînement, le modèle de détection correspondant à la première intersection.

12. Dispositif mobile selon la revendication 10 ou 11, dans lequel le dispositif mobile comprend également un module de communication ;
le module de communication est configuré pour envoyer au serveur, une demande d'obtention utilisée pour obtenir le premier modèle de détection, dans lequel la demande d'obtention contient des secondes informations de localisation géographique du dispositif mobile ou l'identifiant de la première intersection, et les secondes informations de localisation géographique sont utilisées par le serveur pour déterminer l'identifiant de la première intersection ; et
le module de communication est également configuré pour recevoir le premier modèle de détection envoyé par le serveur.

13. Dispositif mobile selon la revendication 11, dans lequel le premier modèle de détection est un modèle de détection correspondant à la fois à la première intersection et à une première direction ;
une manière dont le module de photographie photographie la première image est spécifiquement :
la photographie, par le module de photographie, de la première image dans la première direction de la première intersection ; et
une manière dont le module de photographie photographie la seconde image est spécifiquement :
la photographie, par le module de photographie, de la seconde image dans la première direction de la première intersection, dans lequel
si les premières informations comprennent les premières informations de localisation géographique, les premières informations de localisation géographique sont également utilisées par le serveur pour déterminer la première direction ; si les premières informations comprennent l'identifiant de la première intersection, les premières informations comprennent également la première direction ; il existe une correspondance entre la seconde image, le résultat de détection, l'identifiant de la première intersection, et la première direction ; les premières informations sont utilisées par le serveur pour stocker la correspondance entre la seconde image, le résultat de détection, l'identifiant de la première intersection, et la première direction ; et les images et les résultats de détection qui correspondent à l'identifiant de la première intersection et la première direction et qui sont stockés dans le serveur sont utilisés pour obtenir, par entraînement, le modèle de détection correspondant à la première intersection et à la première direction.

14. Dispositif mobile selon la revendication 11, dans lequel le premier modèle de détection est un modèle de détection correspondant à la fois à la première intersection, à la première direction et à une première voie ;
une manière dont le module de photographie photographie la première image est spécifiquement :
la photographie, par le dispositif mobile, de la première image sur la première voie dans la première direction de la première intersection ; et
une manière dont le module de photographie photographie la seconde image est spécifiquement :
la photographie, par le dispositif mobile, de la seconde image sur la première voie dans la première direction de la première intersection, dans lequel
si les premières informations comprennent les premières informations de localisation géographique, les premières informations de localisation géographique sont également utilisées par le serveur pour déterminer la première direction et un identifiant de la première voie ; si les premières informations comprennent l'identifiant de la première intersection, les premières informations comprennent également la première direction et l'identifiant de la première voie ; il existe une correspondance entre la seconde image, le résultat de détection, l'identifiant de la première intersection, la première direction, et l'identifiant de la première voie ; les premières informations sont utilisées par le serveur pour stocker la correspondance entre la seconde image, le résultat de détection, l'identifiant de la première intersection, la première direction, et l'identifiant de la première voie ; et des images et des résultats de détection qui correspondent à l'identifiant de la première intersection, la première direction, et l'identifiant de la première voie qui sont stockés dans le serveur sont utilisés pour obtenir, par entraînement, le modèle de détection correspondant à la fois à la première intersection, la première direction et la première voie.

15. Serveur, dans lequel le dispositif mobile est une automobile ou un dispositif embarqué et dans lequel le serveur comprend :
un module de communication (1201), configuré pour recevoir des premières informations en provenance d'un dispositif mobile, dans lequel les premières informations comprennent une seconde image et un résultat de détection, la seconde image comprend un feu de signalisation à une première intersection, le résultat de détection est obtenu par le dispositif mobile par détection d'un état de feu de signalisation dans la seconde image en utilisant un modèle général, le modèle général est obtenu par entraînement sur la base d'images dans un premier ensemble et d'un état de feu de signalisation dans chaque image dans le premier ensemble, le premier ensemble comprend des images de feu de signalisation d'une pluralité d'intersections, les premières informations comprennent également des premières informations de localisation géographique du dispositif mobile ou un identifiant de la première intersection, dans lequel lorsque les premières informations comprennent des premières informations de localisation géographique du dispositif mobile, les premières informations de localisation géographique sont utilisées par le serveur pour déterminer l'identifiant de la première intersection, et il existe une correspondance entre la seconde image, le résultat de détection et l'identifiant de la première intersection, dans lequel la seconde image et le résultat de détection correspondant correspondent à l'identifiant de la première intersection ; et
un module de traitement (1202), configuré pour stocker la seconde image ainsi que le résultat de détection et l'identifiant de la première intersection, dans lequel
le module de traitement est également configuré pour obtenir, par entraînement en utilisant un procédé d'apprentissage automatique et en utilisant uniquement plusieurs secondes images et des résultats de détection correspondants qui correspondent à l'identifiant de la première intersection et qui sont stockés, un modèle de détection correspondant à la première intersection.

16. Serveur selon la revendication 15, dans lequel
le module de communication est également configuré pour recevoir, du dispositif mobile, une demande d'obtention utilisée pour obtenir un premier modèle de détection, dans lequel le premier modèle de détection est le modèle de détection correspondant à la première intersection, la demande d'obtention contient des secondes informations de localisation géographique du dispositif mobile ou l'identifiant de la première intersection, et les secondes informations de localisation géographique sont utilisées par le serveur pour déterminer l'identifiant de la première intersection ;
le module de traitement est également configuré pour déterminer le premier modèle de détection sur la base de l'identifiant de la première intersection ; et
le module de communication est également configuré pour renvoyer le premier modèle de détection au dispositif mobile.

17. Serveur selon la revendication 15, dans lequel
le module de communication est également configuré pour diffuser le premier modèle de détection au dispositif mobile situé dans une plage prédéfinie de la première intersection, dans lequel le premier modèle de détection est le modèle de détection correspondant à la première intersection.

18. Serveur selon l'une quelconque des revendications 15 à 17, dans lequel la seconde image est une image photographiée par le dispositif mobile dans une première direction de la première intersection ; si les premières informations comprennent les premières informations de localisation géographique, les premières informations de localisation géographique sont également utilisées par le serveur pour déterminer la première direction ; si les premières informations comprennent l'identifiant de la première intersection, les premières informations comprennent également la première direction ; et il existe une correspondance entre la seconde image, le résultat de détection, l'identifiant de la première intersection et la première direction ;
une manière dont le module de traitement stocke la correspondance entre la seconde image, le résultat de détection et l'identifiant de la première intersection est spécifiquement :
le stockage, par le module de traitement, de la correspondance entre la seconde image, le résultat de détection, l'identifiant de la première intersection et la première direction ; et
une manière dont le module de traitement obtient, par entraînement sur la base des images et des résultats de détection qui correspondent à l'identifiant de la première intersection et qui sont stockés, le modèle de détection correspondant à la première intersection est spécifiquement :
l'obtention, par le module de traitement par entraînement sur la base d'images et de résultats de détection qui correspondent à l'identifiant de la première intersection et la première direction et qui sont stockés, du modèle de détection correspondant à la première intersection et à la première direction.

19. Support de stockage lisible par ordinateur, dans lequel le support de stockage lisible par ordinateur stocke un programme informatique, le programme informatique comprend une instruction de programme, et lorsque l'instruction de programme est exécutée par un processeur, le processeur est activé pour réaliser le procédé selon l'une quelconque des revendications 1 à **9.**
